# EUROPEAN PATENT APPLICATION

(11) **EP 4 832 569 A1**
(43) Date of publication of application: **28.10.2026**
(21) Application number: 24911229.3
(22) Date of filing: 25.12.2024
(51) Int. Cl.: H04W 28/24

(54) **SERVICE POLICY DETERMINATION METHOD AND APPARATUS, AND COMMUNICATION SYSTEM**

(30) Priority: 27.12.2023 CN 202311837894
(71) Applicant: Huawei Technologies Co., Ltd., Shenzhen, Guangdong 518129 (CN)
(72) Inventor: ZHAO, Mingyu, Shenzhen, Guangdong 518129 (CN); YAN, Xueqiang, Shenzhen, Guangdong 518129 (CN); XI, Yan, Shenzhen, Guangdong 518129 (CN); WANG, Junfan, Shenzhen, Guangdong 518129 (CN)
(74) Representative: Maiwald GmbH
(86) International application number: PCT/CN2024/142285
(87) International publication number: WO 2025/140306

(57) **Abstract**

Embodiments of this application provide a service policy determining method and apparatus, and a communication system. The method includes: A first function network element obtains user information of a first service; and determines policy information of the first service based on the user information of the first service. The policy information of the first service includes execution range information of the first service and quality of service information of the first service. Then, the first function network element sends the policy information of the first service to a second function network element. It can be learned that **in** the method, the first function network element determines the policy information of the service from a service dimension, which not only can provide quality of service of a service, but also can provide an execution range of the service. This also supports any new service of a communication network service. Therefore, the method can effectively meet and support policy requirements of various services.

## Description

### CROSS-REFERENCE TO RELATED APPLICATIONS

This application claims priority to Chinese Patent Application No. 202311837894.5, filed with the China National Intellectual Property Administration on December 27, 2023 and entitled "SERVICE POLICY DETERMINING METHOD AND APPARATUS, AND COMMUNICATION SYSTEM", which is incorporated herein by reference in its entirety.

### TECHNICAL FIELD

This application relates to the field of communication technologies, and in particular, to a service policy determining method and apparatus, and a communication system.

### BACKGROUND

In a current communication network, a policy and charging control (policy and charging control, PCC) architecture is used to provide users with services and experience in differentiated and intelligent services and implement a dynamic policy management and charging manner. A policy and charging rules function (policy and charging rules function, PCRF) is a core of a PCC architecture of a 4th generation (4th generation, 4G) or long term evolution (long term evolution, LTE) network. The PCRF is used to assist in service data flow detection, policy enforcement, and flow based charging, to ensure reliable monitoring of a service or a use case and a fee related to each use case. A policy control function (policy control function, PCF) is a core of a PCC architecture of a 5th generation (5th generation, 5G) network. The PCF may be considered as being evolved from the PCRF. The PCF introduces a capability of requesting and monitoring quality of service by session. In addition to retaining such session-based functions, the PCF further introduces another function, including network slice control and a new control mechanism for terminal activities, for example, roaming and mobility management.

In a 4G policy architecture, different end-to-end quality of service (quality of service, QoS) is loaded through bearers. Data flows on a same bearer can obtain same QoS, and data flows on different types of bearers can obtain different QoS. It can be learned that, a coarse QoS management and control granularity results in problems such as high signaling overheads and a long QoS management and control interaction process. It is difficult to cope with burst services and integrated services. In a 5G policy architecture, an end-to-end quality of service flow QoS flow is used. In addition, two-level mapping of a 5G next-generation user plane function (next-generation user plane function, NG-U) tunnel Tunnel and a radio bearer (radio bearer) may be performed on an access network side, which allows a radio access network to have a degree of freedom, thereby improving flexibility and adaptability of service bearer management and control to some extent.

With evolution of communication technologies, in addition to providing a connection service, a communication system further integrates new services such as sensing, computation, intelligence, and trust to provide an integrated service. However, an existing policy architecture cannot meet or support a policy requirement of the new

### SUMMARY

This application provides a service policy determining method and apparatus, and a communication system. The method may meet or support a policy requirement of a new service in a communication network.

According to a first aspect, an embodiment of this application provides a service policy determining method. The method may be performed by a first function network element, or may be performed by a chip, a chip system, a logical module, or software corresponding to the first function network element. This is not limited herein. The first function network element is used as an example. The method may include: The first function network element obtains user information of a first service; and then determines policy information of the first service based on the user information of the first service. The policy information of the first service includes execution range information of the first service and quality of service information of the first service. The first function network element sends the policy information of the first service to a second function network element.

In this embodiment of this application, the first function network element may be deployed standalone in a communication network/communication system, or the first function network element may be co-located with a policy control function network element, or the first function network element may be a policy control function PDF network element. The second function network element may be deployed standalone in a core network, an access network, or a network management system in the communication network/communication system, or the second function network element may be co-located with a first service network element. The first service network element may be but is not limited to a data controller, a sensing service control function, a task anchor, or a task scheduler. Specific deployment, forms, and quantities of first function network elements and second function network elements are not limited in this application.

The first service may include but is not limited to one or more of a sensing service, an artificial intelligence service, a network service, an internet of things service, a security service, and a sustainability service. For example, the sensing service may include services such as identification, speed measurement, ranging, and target positioning. The artificial intelligence service may include services such as abnormality detection, an intelligent service, intelligent orchestration and scheduling, and an intelligent agent. The network service may include a service of a network operator, for example, services such as network optimization, maintenance, operation, and construction. The internet of things service may include a service such as an autonomous driving or intelligent transportation system that needs to analyze data generated by a sensor, a machine in an internet of things (internet of things, IoT), a connected device or a facility in an internet of vehicles, or the like. The security service may include services such as security protection and privacy protection for a network element, a network, a system, and the like. The sustainability service may include services such as network energy saving and sustainability.

In the solution of this application, the first function network element may determine the policy information of the first service based on the user information of the first service. The policy information of the first service includes the execution range information of the first service and the quality of service information of the first service. Therefore, it can be learned that the first function network element in this application determines policy information of each service from a service dimension. The first function network element not only can provide quality of service of the service, but also can provide an execution range of the service. The first function network element also supports one or more new services that may be introduced in the communication system. Therefore, the service policy determining method provided in this application can meet and support policy requirements of various services (including a new service of a communication network service).

In a possible implementation, the user information of the first service may include but is not limited to one or more of the following: user subscription information of the first service, user registration information of the first service, and service subscription information of the first service. In this implementation, the first function network element may effectively determine the corresponding policy information for the first service based on the user information of the first service.

In a possible implementation, that the first function network element obtains the user information of the first service includes: obtaining the user information of the first service from a service user management network element; and the service user management network element may be deployed standalone in a network, or the service user management network element is co-located with a data storage network element, or the service user management network element is a data storage network element.

In this embodiment of this application, the service user management network element may be configured to manage or store user information of a service. For different services, service user management network elements of the services may be a same network element, or may be different network elements. This is not limited. If different services correspond to different service user management network elements, names of the service user management network elements of the services may be the same or may be different. This is not limited either.

In this implementation, the first function network element may effectively obtain the user information of the first service.

In a possible implementation, the quality of service information of the first service may include but is not limited to one or more of bandwidth information of the first service, priority information of the first service, delay information of the first service, delay change information of the first service, security level information of the first service, privacy level information of the first service, transmission rate information of the first service, routing information of the first service, and key information used for the first service.

In this implementation, the first function network element allocates a corresponding bandwidth, priority, delay, delay change, security level, privacy level, transmission rate, route, and key, and the like to the first service based on the user information of the first service, to ensure quality of service of the first service.

In a possible implementation, the policy information of the first service may further include but is not limited to one or more of the following: collection policy information of the first service, forwarding policy information of the first service, computation policy information of the first service, and security policy information of the first service. In this implementation, the first function network element can further determine other policy information required by the first service, to meet various policy requirements of the first service. The forwarding policy information of the first service may provide a composition policy for implementing a data bearer of the first service, and may include topology information such as a source node, a destination node, an intermediate node, and a data pipeline, and policies such as bandwidth and a delay required for data flowing.

According to a second aspect, an embodiment of this application provides a service policy determining method. The method may be performed by a second function network element, or may be performed by a chip, a chip system, a logical module, or software corresponding to the second function network element. This is not limited herein. The second function network element is used as an example. The method may include: The second function network element receives policy information of a first service from a first function network element, where the policy information of the first service includes execution range information of the first service and quality of service information of the first service; and obtains status information of a network and/or capability information of a node within an execution range of the first service. Then, the second function network element determines information about a data bearer of the first service and quality of service information of the data bearer based on the policy information of the first service, and the status information of the network and/or the capability information of the node. The information about the data bearer includes information about at least one data pipeline within the execution range, and the quality of service information of the data bearer includes quality of service information corresponding to each of the at least one data pipeline.

In this embodiment of this application, the first function network element may be deployed standalone in a communication network/communication system, or the first function network element may be co-located with a policy control function network element, or the first function network element may be a policy control function PDF network element. The second function network element may be deployed standalone in a core network, an access network, or a network management system in the communication network/communication system, or the second function network element may be co-located with a first service network element. The first service network element may be but is not limited to a data controller, a sensing service control function, a task anchor, or a task scheduler. Specific deployment, forms, and quantities of first function network elements and second function network elements are not limited in this application.

The first service may include but is not limited to one or more of a sensing service, an artificial intelligence service, a network service, an internet of things service, a security service, and a sustainability service.

In the solution of this application, the second function network element details a policy of the first service based on the policy information of the first service from the first function network element and further based on the status information of the network and/or the capability information of the node within the execution range of the first service. To be specific, the second function network element determines the data bearer of the first service and the quality of service of the data bearer. The data bearer of the first service includes at least one data pipeline used to transmit data of the first service within the execution range of the first service, and quality of service of the data bearer includes quality of service information corresponding to each of the at least one data pipeline. In the method, the second function network element may sense a real-time network status, and perform global planning or orchestration on transmission and quality of service of the service based on the policy information of the service from the first function network element and the real-time network status.

In a possible implementation, the quality of service information of the first service may include but is not limited to one or more of bandwidth information of the first service, priority information of the first service, delay information of the first service, delay change information of the first service, security level information of the first service, privacy level information of the first service, transmission rate information of the first service, routing information of the first service, and key information used for the first service.

In this implementation, the second function network element may receive a corresponding bandwidth, priority, delay, delay change, security level, privacy level, transmission rate, route, and key, and the like of the first service that are provided by the first function network element, to ensure that the second function network element can effectively and accurately plan the policy of the first service.

In a possible implementation, the policy information of the first service may further include but is not limited to one or more of the following: collection policy information of the first service, forwarding policy information of the first service, computation policy information of the first service, and security policy information of the first service. In this implementation, the second function network element can further obtain other policy information required by the first service, to further determine a more accurate policy for the first service, and meet various policy requirements of the first service.

In a possible implementation, that the second function network element determines the information about the data bearer of the first service and the quality of service information of the data bearer based on the policy information of the first service, and the status information of the network and/or the capability information of the node may include: The second function network element determines, based on the execution range information of the first service, and the status information of the network and/or the capability information of the node, information about a destination node and information about a source node that correspond to each of the at least one data pipeline within the execution range of the first service; and then determines, based on the quality of service information of the first service, and the status information of the network and/or the capability information of the node, the quality of service information corresponding to each of the at least one data pipeline.

In this implementation, the second function network element selects, in the execution range of the first service based on the status information of the network and/or capability information of each node in the network, a robust and proper node in the execution range, and uses the node to construct the at least one data pipeline used to transmit the data of the first service. The second function network element may further determine corresponding quality of service for the at least one data pipeline based on the quality of service information of the first service, and the status information of the network and/or the capability information of each node in the network. In this implementation, the second function network element can effectively orchestrate a more accurate layout and more accurate quality of service for the data bearer of the first service.

In a possible implementation, information about each data pipeline includes information about at least one destination node and information about at least one source node, and the method further includes: The second function network element separately sends, based on the information about the at least one source node corresponding to each data pipeline, quality of service information corresponding to the data pipeline to the at least one source node.

In this implementation, the source node and the destination node that correspond to each data pipeline are flexible, and the second function network element may be arbitrarily topologized and orchestrated. The second function network element may send quality of service information of each data pipeline to a corresponding source node. Optionally, the second function network element may further send indication information of the data pipeline (for example, a data pipeline identifier (data pipeline identifier, DPID)) to the corresponding source node. In this implementation, each source node may learn of quality of service information of a data pipeline of a service of the source node.

In a possible implementation, the information about the data pipeline may further include information about at least one intermediate node within the execution range of the first service. In this implementation, a location/type of a node used to construct a data pipeline, or the like is flexible, and a quantity is also flexible.

The following third aspect describes steps performed by a source node (a first source node of a first data pipeline) of a data pipeline (for example, the first data pipeline) corresponding to a first service. For another source node of the first data pipeline or a source node of another data pipeline, refer to the method according to the third aspect. Details of all source nodes are not described in embodiments of this application.

According to a third aspect, an embodiment of this application provides a service policy determining method. The method may be performed by a first source node of a first data pipeline, or may be performed by a chip, a chip system, a logical module, or software corresponding to the first source node of the first data pipeline. This is not limited herein. The first source node of the first data pipeline is used as an example. The method may include: The first source node of the first data pipeline receives quality of service information of the first data pipeline from a second function network element. The first data pipeline is any one of at least one data pipeline corresponding to a first service. The first source node sends data of the first service and indication information of the quality of service information of the first data pipeline.

In this embodiment of this application, the first source node may be a policy enforcement function network element. The policy enforcement function network element may be deployed standalone and serve a second service network element, or the policy enforcement function network element may be deployed in a second service network element. The second service network element may be but is not limited to a terminal, a radio access network node, an access and mobility management function, a session management function, a unified data repository, a user plane function, or a sensing data processing function.

Indication information of quality of service of the first data pipeline may be identification information (for example, an identifier ID, a sequence number, a label, or a name) of the quality of service, or indication information of quality of service of the first data pipeline is the quality of service of the first data pipeline. This is not limited herein.

In the solution of this application, the first source node of the first data pipeline receives the quality of service information that is of the first data pipeline and that is sent by the second function network element, and after collecting the data of the first service, sends the data of the first service and the indication information of the quality of service information of the first data pipeline together. After receiving the data of the first service and the indication information of the quality of service information of the first data pipeline that are sent by the first source node, a receiving end (for example, a destination node of the first data pipeline) may determine, based on the indication information of the quality of service information, quality of service information corresponding to the data of the first service, to allocate a corresponding resource (for example, a delay, a rate, or a priority) for subsequently processing/transmitting the data of the first service, thereby meeting a policy requirement of the first service. In addition, the receiving end may further perform corresponding communication tunnel/radio bearer mapping on the data of the first service based on the indication information (for example, a QoS identifier) of the quality of service, to effectively complete data transmission of the first service.

For example, the first source node is a terminal device, the receiving end is an access network device, and the indication information of the quality of service information corresponding to the first data pipeline is a QoS identifier. After receiving the data of the first service and the QoS identifier that are sent by the terminal device, the access network device maps the data of the first service from the first data pipeline to a corresponding radio bearer based on the QoS identifier and a quality of service rule.

In a possible implementation, the data of the first service and the indication information of the quality of service information of the first data pipeline are located in a same data packet. In this implementation, the first source node may effectively further send the indication information of the quality of service information of the first data pipeline when sending the data of the first service. In this embodiment of this application, the data of the first service and the indication information of the quality of service information of the first data pipeline may alternatively be located in a same message, and a type of the message is not limited. In addition, the data of the first service and the indication information of the quality of service information of the first data pipeline may alternatively be located in different data packets or messages. This is not limited either. The first source node may select a proper transmission manner based on an actual requirement.

In a possible implementation, when the first source node is deployed in a first radio access network node, that the first source node sends the data of the first service and the indication information of the quality of service information of the first data pipeline includes: mapping the first data pipeline to a corresponding first communication tunnel; and sending the data of the first service and the indication information of the quality of service information of the first data pipeline to a second radio access network node or a core network element through the first communication tunnel. The second radio access network node and the core network element may be destination nodes or intermediate nodes corresponding to the first data pipeline.

In this embodiment of this application, at least one communication tunnel (including the first communication tunnel) may be established in advance, or may be established in real time. This is not limited herein. The first source node may find, through matching, a corresponding communication tunnel based on the quality of service information of the first data pipeline.

For example, a quality of service QoS value or a quality of service QoS range corresponding to each of at least one communication tunnel (including the first communication tunnel) is preset. If a quality of service QoS value of the first data pipeline is a quality of service QoS value corresponding to the first communication tunnel, or a quality of service QoS value of the first data pipeline falls within a quality of service QoS range corresponding to the first communication tunnel, it is determined that a communication tunnel matching the first data pipeline is the first communication tunnel.

In this implementation, when the first source node is an access network node and the destination node is also an access network node or is a core network node, the first source node may perform tunnel mapping, that is, determine the communication tunnel corresponding to the first data pipeline, and further, effectively send the data of the first service and the indication information of the quality of service information of the first data pipeline to the destination node through the communication tunnel.

In a possible implementation, the first communication tunnel may further correspond to a second data pipeline, and the second data pipeline is used to transmit data of a second service. It can be learned that in this embodiment of this application, data pipelines of different services may match a same communication tunnel.

In a possible implementation, when the first source node is deployed in a terminal, that the first source node sends the data of the first service and the indication information of the quality of service information of the first data pipeline includes: The first source node maps the first data pipeline to a corresponding first data radio bearer; and sends the data of the first service and the indication information of the quality of service information of the first data pipeline to a radio access network node through the first data radio bearer. The radio access network node may be a destination node or an intermediate node corresponding to the first data pipeline.

In this embodiment of this application, at least one data radio bearer (including the first data radio bearer) may be established in advance, or may be established in real time. This is not limited herein. The first source node may find, through matching, a corresponding data radio bearer based on the quality of service information of the first data pipeline.

For example, a quality of service QoS value or a quality of service QoS range corresponding to each of the at least one data radio bearer (including the first data radio bearer) is preset. If a quality of service QoS value of the first data pipeline is a quality of service QoS value corresponding to the first data radio bearer, or a quality of service QoS value of the first data pipeline falls within a quality of service QoS range corresponding to the first data radio bearer, it is determined that a data radio bearer matching the first data pipeline is the first data radio bearer.

In a possible implementation, the first data radio bearer may further correspond to a second data pipeline, and the second data pipeline is used to transmit data of a second service. It can be learned that in this embodiment of this application, data pipelines of different services may match a same data radio bearer.

According to a fourth aspect, an embodiment of this application provides a communication system. The communication system may include a first function network element and a second function network element. The first function network element is configured to: obtain user information of a first service; and determine policy information of the first service based on the user information of the first service. The policy information of the first service includes execution range information of the first service and quality of service information of the first service. Then, the first function network element sends the policy information of the first service to the second function network element. The second function network element is configured to: obtain status information of a network and/or capability information of a node within an execution range of the first service; and then determine information about a data bearer of the first service and quality of service information of the data bearer based on the policy information of the first service, and the status information of the network and/or the capability information of the node. The information about the data bearer includes information about at least one data pipeline within the execution range of the first service, and the quality of service information of the data bearer includes quality of service information corresponding to each of the at least one data pipeline.

In this embodiment of this application, the first function network element may be deployed standalone in a communication network/communication system, or the first function network element may be co-located with a policy control function network element, or the first function network element may be a policy control function PDF network element. The second function network element may be deployed standalone in a core network, an access network, or a network management system in the communication network/communication system, or the second function network element may be co-located with a first service network element. The first service network element may be but is not limited to a data controller, a sensing service control function, a task anchor, or a task scheduler. Specific deployment, forms, and quantities of first function network elements and second function network elements are not limited in this application.

In a possible design, the first function network element is further configured to perform the method according to any possible implementation of the first aspect, and the second function network element is further configured to perform the method according to any possible implementation of the second aspect.

In a possible design, the communication system may further include at least one destination node and at least one source node that correspond to each data pipeline, and any one of the at least one source node performs the method according to any one of the third aspect and the possible implementations of the third aspect.

In this embodiment of this application, the source node, the destination node, and/or an intermediate node each may be a policy enforcement function network element. The policy enforcement function network element may be deployed standalone and serve a second service network element, or the policy enforcement function network element may be deployed in a second service network element. The second service network element may be but is not limited to a terminal, a radio access network node, an access and mobility management function, a session management function, a unified data repository, a user plane function, or a sensing data processing function.

According to a fifth aspect, an embodiment of this application further provides a communication apparatus. The apparatus may be configured to perform the method according to the first aspect. The apparatus may be a first function network element, or the apparatus may be a component (for example, a chip, a chip system, or a circuit) in the first function network element, or the apparatus may be a logical module or software corresponding to the first function network element, or the apparatus may be an apparatus that can be used together with the first function network element.

In a possible implementation, the apparatus may include one-to-one corresponding modules or units for performing the methods/operations/steps/actions described in the first aspect. The module or the unit may be a hardware circuit, may be software, or may be implemented by a hardware circuit in combination with software. In a possible implementation, the apparatus may include a processing unit (which may also be referred to as a processing module) and a communication unit (which may also be referred to as a communication module). The communication unit may be configured to perform a receiving and/or sending function, and the processing unit may be configured to perform the method according to any one of the first aspect or the possible implementations of the first aspect.

According to a sixth aspect, an embodiment of this application further provides a communication apparatus. The apparatus may be configured to perform the method according to the second aspect. The apparatus may be a first function network element, or the apparatus may be a component (for example, a chip, a chip system, or a circuit) in the second function network element, or the apparatus may be a logical module or software corresponding to the second function network element, or the apparatus may be an apparatus that can be used together with the second function network element.

In a possible implementation, the apparatus may include one-to-one corresponding modules or units for performing the methods/operations/steps/actions described in the second aspect. The module or the unit may be a hardware circuit, may be software, or may be implemented by a hardware circuit in combination with software. In a possible implementation, the apparatus may include a processing unit (which may also be referred to as a processing module) and a communication unit (which may also be referred to as a communication module). The communication unit may be configured to perform a receiving and/or sending function, and the processing unit may be configured to perform the method according to any one of the second aspect or the possible implementations of the second aspect.

According to a seventh aspect, an embodiment of this application further provides a communication apparatus. The apparatus may be configured to perform the method in the third aspect. The apparatus may be a first source node, or the apparatus may be a component (for example, a chip, a chip system, or a circuit) in the first source node, or the apparatus may be a logical module or software corresponding to the first source node, or the apparatus may be an apparatus that can be used together with the first source node.

In a possible implementation, the apparatus may include one-to-one corresponding modules or units to perform the methods/operations/steps/actions described in the third aspect. The module or the unit may be a hardware circuit, may be software, or may be implemented by a hardware circuit in combination with software. In a possible implementation, the apparatus may include a processing unit (which may also be referred to as a processing module) and a communication unit (which may also be referred to as a communication module). The communication unit may be configured to perform a receiving and/or sending function, and the processing unit may be configured to perform the method according to any one of the third aspect or the possible implementations of the third aspect.

In this embodiment of this application, an apparatus of another source node corresponding to the first service is similar to that of the first source node. Details are not described again.

According to an eighth aspect, an embodiment of this application provides an apparatus. The apparatus includes at least one processor and a communication interface, the communication interface is configured to communicate with another apparatus, and the processor is configured to run a group of programs, so that the apparatus implements the method according to any one of the first aspect or the possible implementations of the first aspect, or the apparatus implements the method according to any one of the second aspect or the possible implementations of the second aspect, or the apparatus implements the method according to any one of the third aspect or the possible implementations of the third aspect.

According to a ninth aspect, an embodiment of this application further provides a computer-readable storage medium. The storage medium stores a computer program or instructions. When the computer program or the instructions are executed by a computer, the method according to any one of the first aspect or the possible implementations of the first aspect may be implemented, or the method according to any one of the second aspect or the possible implementations of the second aspect is implemented, or the method according to any one of the third aspect or the possible implementations of the third aspect is implemented.

According to a tenth aspect, an embodiment of this application further provides a computer program product including a computer program or instructions. When the computer program product is run on a computer, the method according to any one of the first aspect or the possible implementations of the first aspect is performed, the method according to any one of the second aspect or the possible implementations of the second aspect is performed, or the method according to any one of the third aspect or the possible implementations of the third aspect is performed.

According to an eleventh aspect, an embodiment of this application further provides a chip system. The chip system includes a processor, configured to support a first function network element in implementing the function in the first aspect, or configured to support a second function network element in implementing the function in the second aspect, or configured to support a first source node in implementing the function in the third aspect.

In a possible design, the chip system further includes a memory. The memory is configured to store and load necessary program instructions and data that are executed by an apparatus. The chip system may include a chip, or may include a chip and another discrete component.

It should be noted that, for technical effects that can be achieved in any one of the fourth aspect to the eleventh aspect or the possible implementations of the fourth aspect to the eleventh aspect, correspondingly refer to the descriptions of technical effects that can be achieved in any one of the first aspect to the third aspect or the possible implementations of the first aspect to the third aspect. Details are not described herein again.

### BRIEF DESCRIPTION OF DRAWINGS

FIG. 1 is a diagram of a data plane function architecture;
FIG. 2A(1) and FIG. 2A(2) are diagrams of mapping relationships between a data channel and an underlying bearer in 4G and 5G;
FIG. 2B is a diagram of a specific mapping relationship between a data channel and an underlying bearer in a PCC architecture in 5G;
FIG. 3A to FIG. 3D are diagrams of a comparison between a policy architecture provided in embodiments of this application and a current architecture;
FIG. 4 is a diagram of a possible and non-limiting unified policy architecture according to an embodiment of this application;
FIG. 5 is a diagram of a location of a DFP protocol layer in a 6G data plane protocol stack according to an embodiment of this application;
FIG. 6 is a schematic flowchart of a service policy determining method according to an embodiment of this application;
FIG. 7A to FIG. 7C are diagrams of policies of three service dimensions according to an embodiment of this application;
FIG. 8A is a diagram of a mapping relationship among UE1, RAN1, and a PEF according to an embodiment of this application;
FIG. 8B is a diagram of a specific mapping relationship among UE1, RAN1, and a PEF according to an embodiment of this application;
FIG. 9A-1 to FIG. 9A-3 are a schematic flowchart of an implementation according to an embodiment of this application;

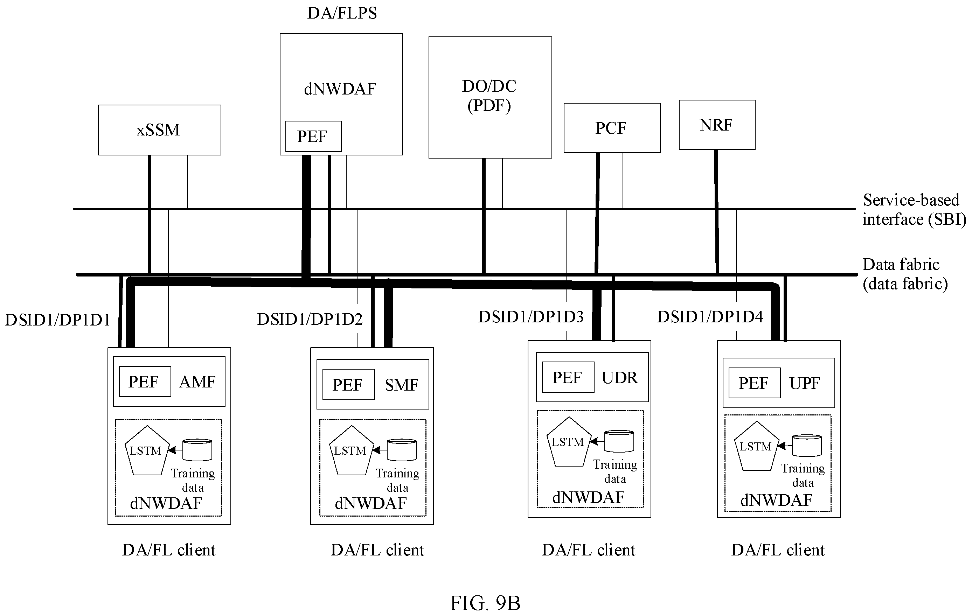

FIG. 9B is a diagram of a policy architecture of an AI training service according to an embodiment of this application;
FIG. 10A-1 to FIG. 10A-4 are a schematic flowchart of another implementation according to an embodiment of this application;

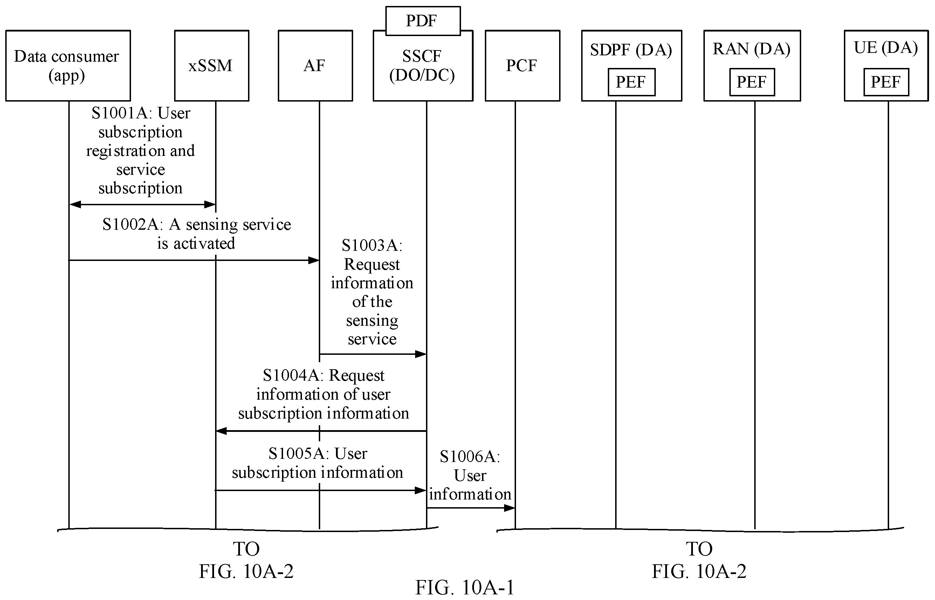

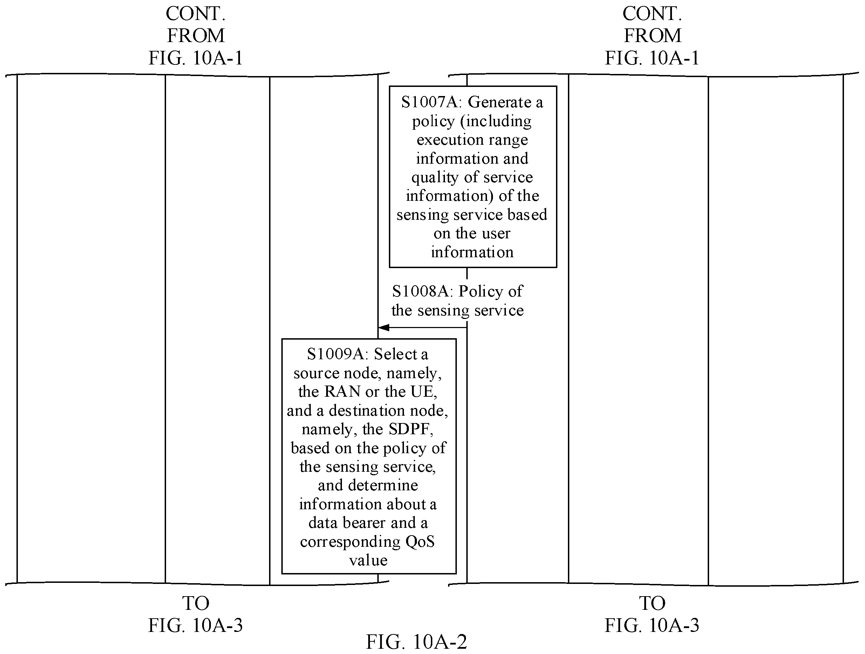

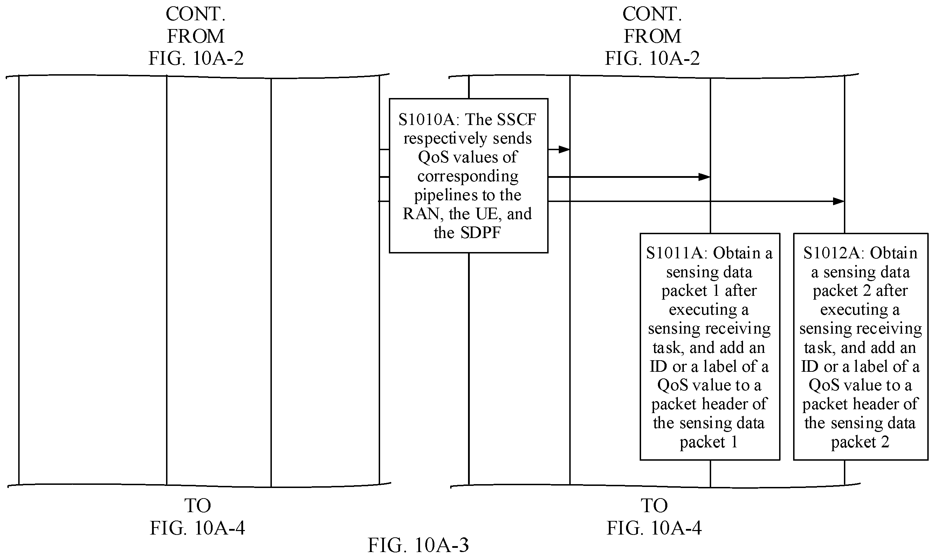

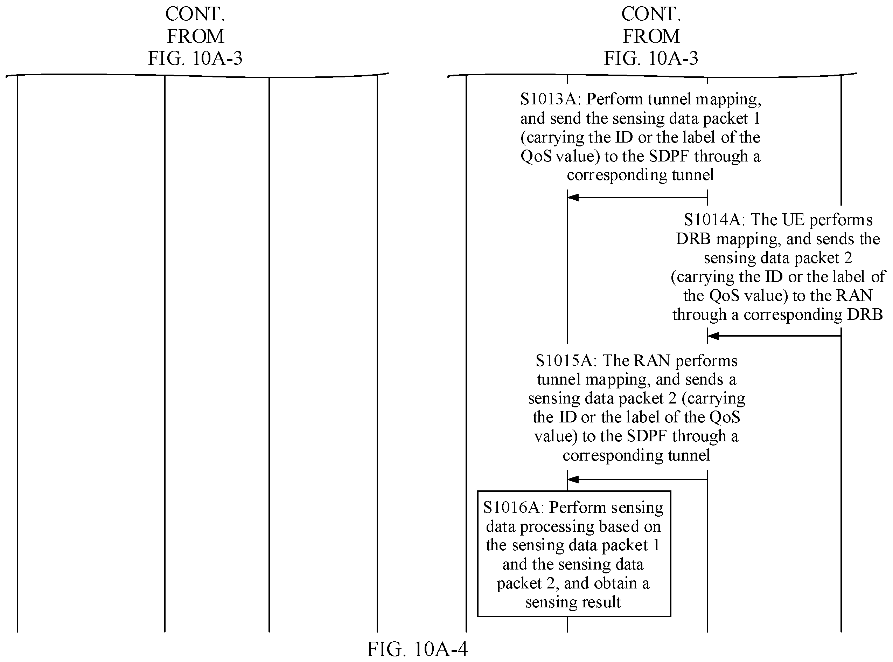

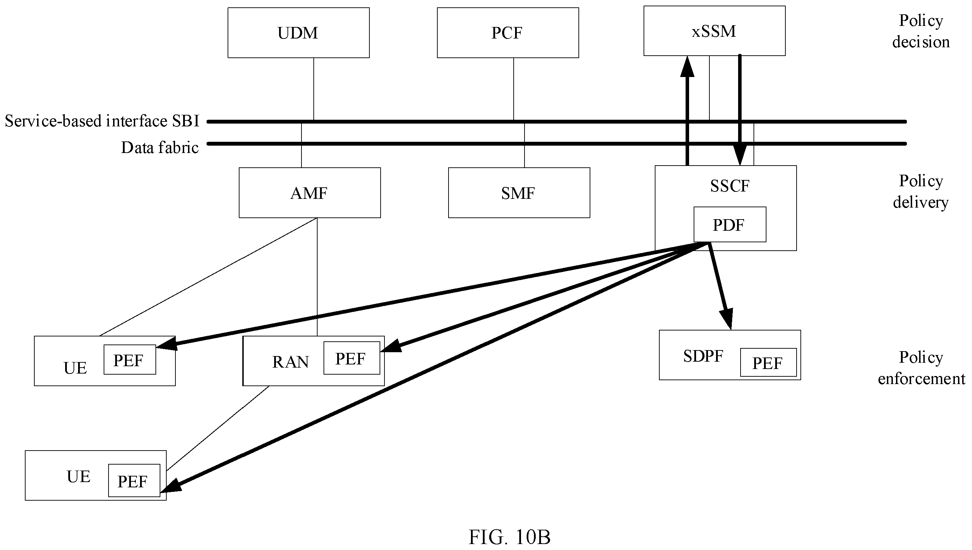

FIG. 10B is a diagram of a policy architecture of a sensing service according to an embodiment of this application;

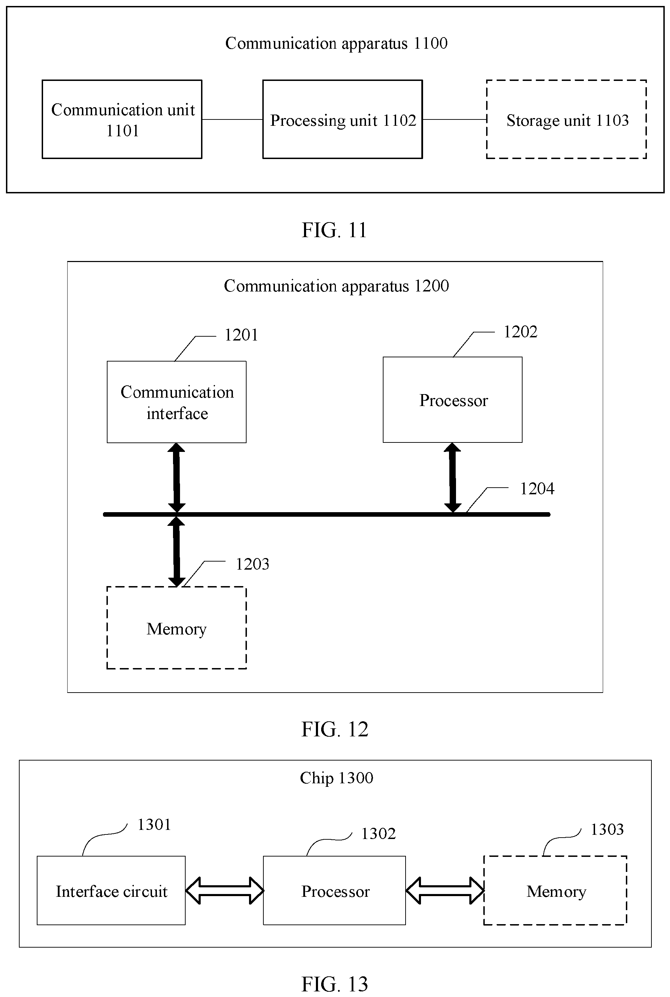

FIG. 11 is a diagram of a communication apparatus according to an embodiment of this application;
FIG. 12 is a diagram of another communication apparatus according to an embodiment of this application; and
FIG. 13 is a diagram of an apparatus of another chip according to an embodiment of this application.

### DESCRIPTION OF EMBODIMENTS

The following clearly and completely describes the technical solutions in embodiments of this application with reference to the accompanying drawings in embodiments of this application. Terms used in the following embodiments are merely intended to describe specific embodiments, but are not intended to limit this application. As used in the specification and appended claims of this application, singular expressions "one", "a", "the", "the foregoing", "this", and "the one" are also intended to include expressions such as "one or more", unless the contrary is clearly indicated in the context. In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof indicates any combination of the items, including one of the items (pieces) or any combination of a plurality of the items (pieces). For example, at least one item (piece) of a, b, or c indicates a, b, c, a and b, a and c, b and c, or a, b, and c, where a, b, and c may be singular or plural.

Reference to "one embodiment", "some embodiments", or the like described in this specification means that one or more embodiments of this application include a specific feature, structure, or characteristic described with reference to embodiments. Therefore, statements "in one embodiment", "in some embodiments", "in some other embodiments", and the like in the differences in this specification do not necessarily mean the same embodiment, but mean "one or more but not all embodiments", unless otherwise specially emphasized in other ways. The "implementation" in this specification is similar to the foregoing. The terms "include", "have", and their variants all mean "include but are not limited to", unless otherwise specifically emphasized in another manner. The term like "example" or "for example" is used to represent an example, an illustration, or a description. Any embodiment or design scheme described with "example" or "for example" should not be explained as being more preferred or having more advantages than another embodiment or design scheme. Use of the terms such as "example" or "for example" is intended to present a related concept in a specific manner for ease of understanding.

"A plurality of" in embodiments of this application means "greater than or equal to two". It should be noted that in the descriptions of embodiments of this application, terms such as "first", "second", "1", and "2" are merely used for distinguishing and description, and cannot be understood as an indication or implication of relative importance, or an indication or implication of an order. In addition, the term "indicating" mentioned in descriptions of embodiments of this application may include directly indicating and indirectly indicating. When indication information is described as indicating A, the description may include that the indication information directly indicates A or indirectly indicates A, but does not mean that the indication information necessarily carries A. In addition, steps corresponding to dashed boxes or dashed lines in the drawings for the specification are represented as optional steps.

This application provides a service policy determining method. To better understand the solutions in embodiments of this application, the following first explains and describes related technical features and names in embodiments of this application. It should be noted that these explanations are intended to make embodiments of this application easier to understand, but should not be considered as a limitation on the protection scope claimed in this application.

### I. Data plane function architecture:

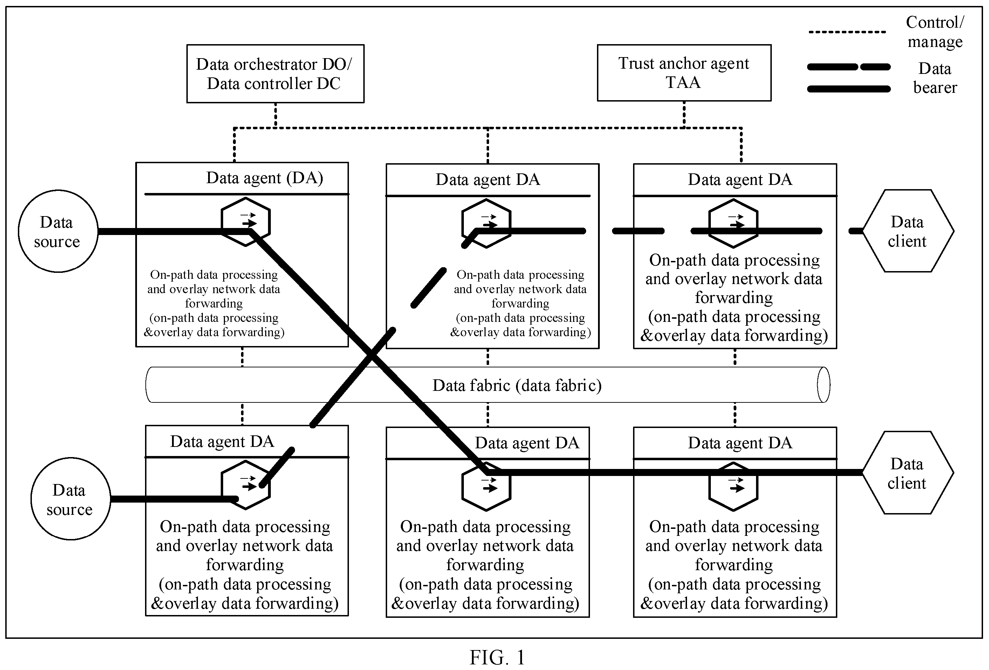

A normalized data service architecture is constructed based on a data plane, and may provide trusted data for intelligent services such as artificial intelligence (artificial intelligence, AI) and sensing in a communication network. FIG. 1 shows a data plane function architecture. A data plane mainly includes a data orchestrator (data orchestrator, DO), a data agent (data agent, DA), a trust anchor agent (trust anchor agent, TAA), and a data storage function (data storage function, DSF).

The data orchestrator DO is responsible for a coarse-grained and non-real-time data orchestration task. The DO may be configured to: select a DA based on a received data service request, and orchestrate and manage a DA function, to dynamically establish an end-to-end (end-to-end, E2E) logical (overlay) data transmission network topology (topology) for a data application, orchestrate data flowing between DAs in such a network, and feed back, to the application, a response to the request.

The DO may further convert the received data service request into a corresponding data pipeline construction request, and send the data pipeline construction request to a data controller DC. The DO may further be responsible for collaboration with another network service. For example, a computational power network service orchestrates computational power, and the DO orchestrates data. In some embodiments, the DO and the DC may alternatively be deployed in a same entity device.

In addition, the DO has a built-in data security protection and privacy protection technology library that includes differential privacy, homomorphic encryption, and zero-knowledge proof and that is used to provide a data security and privacy protection capability and enable a data protection technology to the DA based on a requirement.

The data controller (data controller, DC) is responsible for a fine-grained real-time orchestration task. The DC may be configured to: monitor and manage the DA in real time, and combine data pipelines based on a capability of the DA and a data service requirement. The DO and DC may cooperate to implement data pipeline elasticity (the data pipeline elasticity refers to fast adaptation to changing requirements) and programmability (namely, flexible configuration of data pipelines).

The data agent DA is configured to provide functions such as data collection, preprocessing, storage, and analysis. The DA may be deployed on a network function (network function, NF), a radio access network (radio access network, RAN), a transfer network (transfer network, TN) node, a terminal, an operation, administration, and maintenance (operation, administration, and maintenance, OAM) system of an operator network, or the like, or may be deployed standalone (standalone).

In this embodiment of this application, the DO/DC may select a data agent DA based on a service requirement and capabilities reported by all DAs, and orchestrate the DA to establish a dynamic data bearer, to provide a service for a service. One data bearer has one service identifier (identifier, ID) and one data service task identifier (data service task ID, DSID). One data bearer may include a plurality of data pipelines (data pipeline). Each data pipeline has a respective ID, for example, a data pipeline identifier (data pipeline ID, DPID). Each data pipeline includes a series of data processing units in sequence based on a requirement. An output of a previous unit is an input of a current unit. Therefore, in terms of data collection, preprocessing, storage, and application/analysis, a data flow carried on the data bearer may be output from the DA based on service requirements and provided by the DA for an external application through a service interface.

Data storage function DSF: The DSF is an extension of storage of the DA, supports storage of streaming (streaming) data and batch (batch) data, and supports distributed or centralized deployment.

The trust anchor agent TAA is configured to provide a trust service such as authentication authorization accounting (authentication authorization accounting, AAA), and may store data that cannot be tampered with, for example, a public key of a terminal or a network device, a short transaction, an index, or important data that cannot be tampered with. The data service architecture uses the trust anchor agent to enable users to have independent control over data, implement data trustworthiness, auditability, and traceability, and meet compliance requirements of the personal information protection law (personal information protection law, PIPL) or the general data protection regulation (general data protection regulation, GDPR).

### II. Policy and charging control (policy and charging control, PCC) architecture:

The PCC architecture is a common policy architecture in a current mobile communication network. A PCRF is a core of a PCC architecture of a 4G or LTE network. The PCRF is used to assist in service data flow detection, policy enforcement, and flow based charging, to ensure reliable monitoring of a service or a use case and a fee related to each use case. A PCF is a core of a PCC architecture of a 5G network. The PCF is evolved from the 4G policy and charging rules function (PCRF). Funtions of the PCF introduce a capability of requesting and monitoring quality of service by session. In addition to retaining the session-based function, the PCF further introduces an additional function, including network slice control and a new control mechanism for terminal activities, for example, roaming and mobility management.

Differences between the 4G policy architecture and the 5G policy architecture are mainly as follows:
(1) Mapping relationships between a data channel and an underlying bearer are different: There is an end-to-end (end-to-end, E2E) bearer in 4G, for example, an evolved packet system (evolved packet system, EPS) bearer. End-to-end quality of service QoS is achieved through an EPS bearer. 5G end-to-end E2E transmission is performed through a QoS flow, and the transmission relates to two-level mapping, for example, mapping of a next-generation user plane function tunnel (NG-U Tunnel) and mapping of a radio bearer (radio bearer, RB) in 5G.

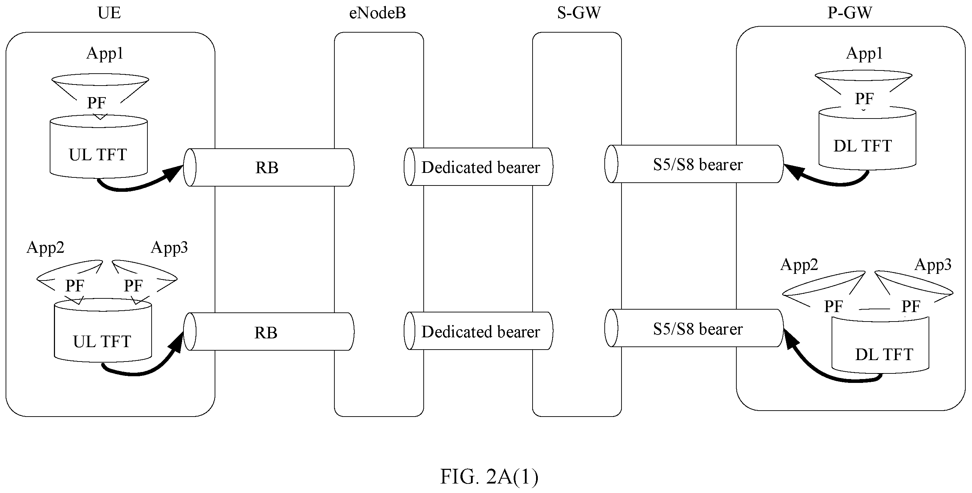

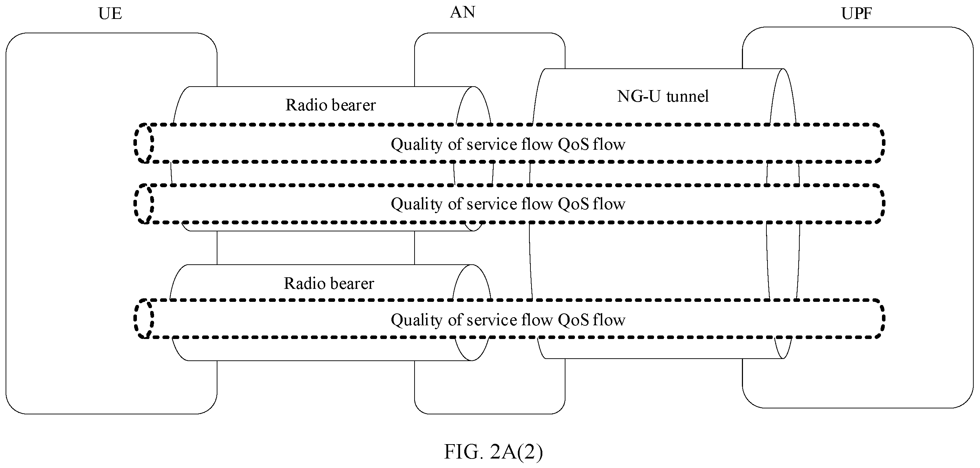

One-level mapping in 4G: There is a one-to-one correspondence between underlying bearers in 4G. A transmitting end completes mapping of a data packet to an evolved packet system EPS bearer, that is, may implement association between the data packet and the bearer. As shown in FIG. 2A(1), for mapping of an uplink EPS bearer, between user equipment UE and a base station eNode, a physical transmission channel of the EPS bearer is a radio bearer RB, and the UE may map data of one uplink service (for example, app1) to one RB through an uplink (uplink, UL) traffic flow template (traffic flow template, TFT) (the TFT is a set of a group of packet filters (packet filters, PFs)), to send the data to the base station eNodeB, or the UE may aggregate data of a plurality of uplink services (for example, app2 and app3), and map the aggregated data to one RB through a UL TFT (a set of a plurality of groups of PFs), to send the aggregated data to the base station eNodeB; between the eNodeB and a serving gateway (serving gateway, S-GW), a physical transmission channel of the EPS bearer may be a dedicated bearer (one type of S1 bearer), and the eNode may map the RB to the dedicated bearer in a one-to-one manner, to transmit the RB to the S-GW through the dedicated bearer; and between the S-GW and a packet gateway (PDN gateway, P-GW), a physical transmission channel of the EPS bearer is an S5/S8 bearer (GTP tunnel), and the S-GW may map the dedicated bearer to the S5/S8 bearer in a one-to-one manner, to transmit the dedicated bearer to the P-GW through the S5/S8 bearer. For mapping of a downlink EPS bearer, the P-GW side may map data of one service (for example, app1) to one S5/S8 bearer through a downlink (downlink, DL) traffic flow template TFT, or may aggregate data of a plurality of services (such as app2 and app3), and map the aggregated data to one S5/S8 bearer through a DL TFT, to send the aggregated data to the S-GW; the S-GW side maps the S5/S8 bearer to a dedicated bearer in a one-to-one manner, to send the S5/S8 bearer to the eNodeB; and the eNodeB maps the dedicated bearer to an RB in a one-to-one manner, to send the RB to a terminal.

Two-level mapping in 5G: A data packet transmitting end performs mapping of a data packet to a quality of service flow (QoS flow), and mapping of the quality of service flow (QoS flow) to a radio bearer (radio bearer) on an air interface side, to implement end-to-end association between the data packet and the QoS flow. Both a mapping relationship between a data packet and a quality of service flow (QoS Flow) and a mapping relationship between a quality of service flow (QoS flow) and a radio bearer (radio bearer) are N:1, where N is an integer greater than or equal to 1. As shown in FIG. 2A(2), there is a mapping between a quality of service flow (QoS flow) and a radio bearer (radio bearer) between UE and an access network (access network, AN), and there is a mapping between a radio bearer (Radio Bearer) and a next-generation user plane function tunnel (NG-U tunnel) between an access network AN and a user plane function (user plane function, UPF) in a core network. A mapping relationship between a radio bearer (radio bearer) and a next-generation user plane function tunnel (NG-U Tunnel) is M:1, where M is an integer greater than or equal to 1.

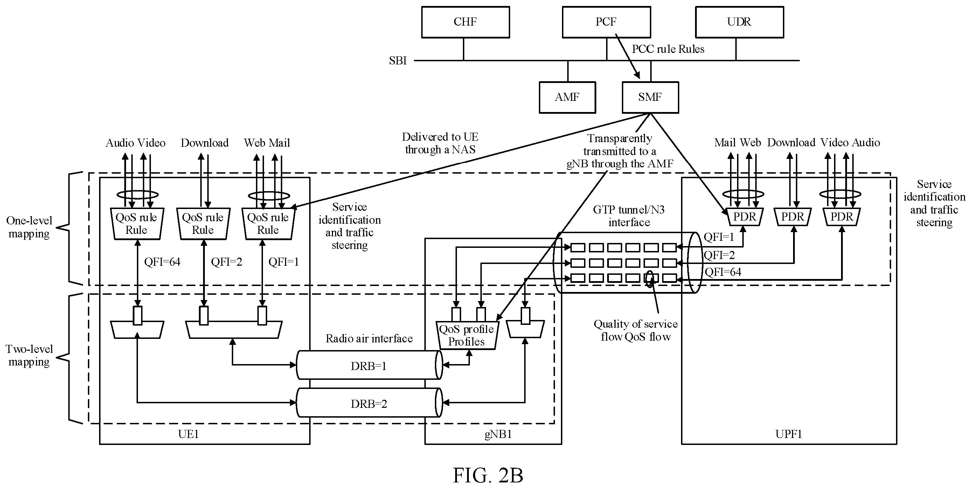

FIG. 2B shows a specific policy mapping relationship in 5G. As shown in FIG. 2B, one-level mapping is mapping of a data packet to a quality of service flow (QoS flow), and two-level mapping is mapping from a quality of service flow (QoS flow) to a data radio bearer (data radio bearer, DRB) on a radio air interface side. Both a correspondence between a quality of service rule QoS rule and a QoS flow on the UE and a correspondence between a packet description rule (packet description rule, PDR) and a QoS flow on the user plane function UPF are a correspondence of N:1 (N is an integer greater than or equal to 1). A quality of service flow identifier (QoS flow ID, QFI) may be added at service data adaptation (service data adaptation protocol, SDAP) layers of user plane protocol stacks of the UE and the gNB. In this way, a receiving end may perform mapping between a QoS flow and a DRB by reading a value of the identifier.

(2) 4G and 5G service traffic steering mechanisms are different. One PDU session (PDU session) has only one N3/N9 tunnel (tunnel). The N3/N9 interface uses a general packet radio service (general packet radio service, GPRS) tunneling protocol (GPRS tunneling protocol, GTP), and corresponds to only one tunnel endpoint identifier (tunnel endpoint identifier, TEID). To identify different QFIs, a new field is required. A QFI parameter is encapsulated in a packet header of a GTP tunnel of a user plane packet of the N3 interface. Padding padding in a signaling file includes four bits. First two bits are used to identify an uplink or downlink, and last two bits are used to identify the QFI.

In the 4G policy architecture, all data flows on a same bearer obtain a same QoS guarantee (for example, a scheduling policy, buffer queue management, and link layer configuration), and different QoS guarantees use different types of EPS bearers. A 4G QoS architecture has problems such as coarse-grained QoS management and control, high signaling overheads, and a long QoS management and control interaction process. Therefore, the 4G QoS architecture is not applicable to burst services and integrated services.

In the 5G policy architecture, a basic granularity of a 5G QoS architecture is refined to a QoS flow. Compared with 4G QoS management and control, two-level mapping of the 5G QoS architecture allows a RAN side to have a degree of freedom. The 5G QoS system architecture improves flexibility and adaptability of service bearer management and control to some extent.

With evolution of communication technologies, in addition to providing a connection service, a communication system further integrates new services such as sensing, computation, intelligence, and trust to provide an integrated service. However, an existing policy architecture cannot meet or support a policy requirement of the new service. For example, there may be the following reasons:
(1) For new services such as sensing and AI, a source node and a destination node are more flexible, instead of being anchored on UE, a UPF, or the like, and may be terminated on a RAN node, which brings a challenge to service classification and policy enforcement. An existing PCC architecture does not support the new service. A unified policy on an entire network needs to be considered for security, sustainability, and the like.
(2) A current policy architecture is unaware of a service, and is from a terminal UE dimension. An uplink/downlink source adds a QoS label based on information such as a 5-tuple, and performs traffic steering. However, a global policy orchestration mechanism is lacked for multi-UE or multi-source services (for example, AI and sensing).
(3) The current policy architecture lacks real-time sensing and policy updating capabilities, especially on a radio access network RAN side. In a 5G network, a QoS requirement is determined by a core network. The core network cannot obtain real-time information such as a resource status and an air interface change on the access network side in a timely manner, and the core network formulates a QoS policy and a parameter based only on user subscription information and a service requirement. Consequently, a QoS requirement of a service cannot match a QoS capability of a network, causing problems such as poor service experience and low network running efficiency.

In view of the foregoing problem, embodiments of this application provide a policy architecture and a technical solution, to support or meet policy requirements of various services (including a new service introduced in a communication network). The policy architecture and the technical solution provided in embodiments of this application may be applied to various communication systems evolved after 5G, for example, a 6G communication system. Similarly, the policy architecture and the technical solution provided in embodiments of this application may also be applied to a 4G communication system, for example, a long term evolution LTE communication system, and may also be applied to a 5G communication system, for example, a 5G new radio (new radio, NR) communication system. This is not limited herein. In addition, the policy architecture and the technical solution provided in embodiments of this application may be further applied to a satellite communication system. The satellite communication system may be integrated with the foregoing communication system. Certainly, the policy architecture and the technical solution provided in embodiments of this application may also be applied to another communication system, provided that the communication system has a policy formulation requirement. In addition, the communication system may be applied to a future-oriented communication technology. The system described in embodiments of this application is intended to describe the policy architecture and the technical solution in embodiments of this application more clearly, and constitutes no limitation on the policy architecture and the technical solution provided in embodiments of this application. A person of ordinary skill in the art may learn that with evolution of a network architecture, the policy architecture and the technical solution provided in embodiments of this application are also applicable to similar technical problems.

The following describes the policy architecture provided in embodiments of this application.

In the policy architecture provided in embodiments of this application, in addition to an existing connection policy, policy services for services such as security, data, and sustainability are further added. These policy services may be referred to as beyond-connectivity policy services, or may be referred to as another name. This is not limited herein.

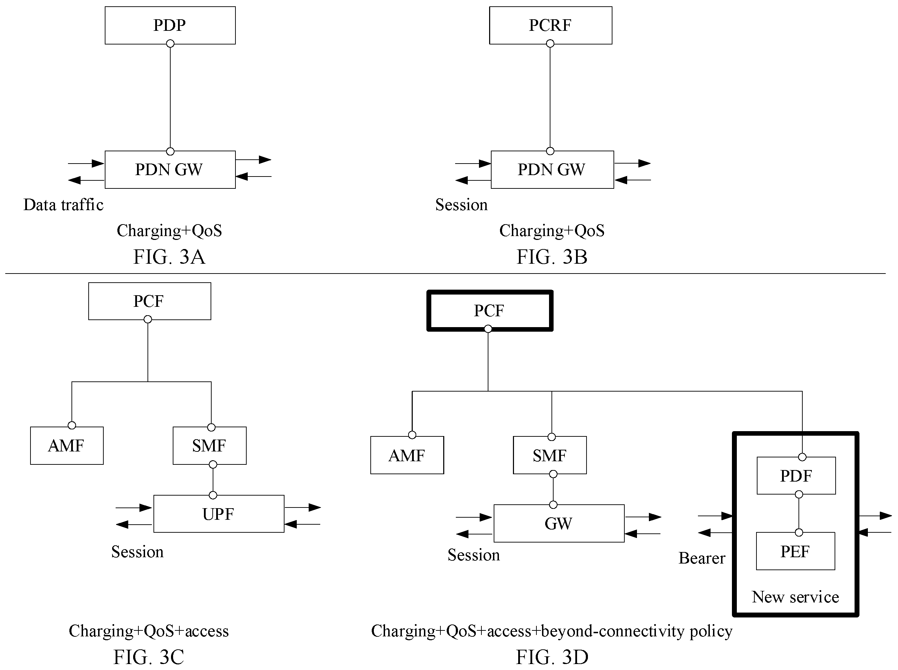

FIG. 3A to FIG. 3D show a policy architecture provided in an embodiment of this application and several existing policy architectures. FIG. 3A shows a 3G policy architecture, and FIG. 3B shows a 4G policy architecture. It can be learned that the 3G policy architecture and the 4G policy architecture provide quality of service QoS management and charging. FIG. 3C shows a 5G policy architecture. It can be learned that access management (access management, AM) and UE access policy management are added in the 5G policy architecture. In conclusion, 3G to 5G policy architectures are mainly connectivity-oriented policy architectures, namely, a policy of establishing a communication channel between UE and a network anchor (for example, a 4G public data network (public data network, PDN) gateway (gateway, GW), or a 5G UPF).

FIG. 3D shows a policy architecture that supports a beyond-connectivity policy service according to an embodiment of this application. As shown in FIG. 3D, in the policy architecture, a beyond-connectivity policy architecture is newly added based on the connectivity-oriented policy architecture. The beyond-connectivity policy architecture mainly includes functions such as a policy control function (PCF), a policy delivery function (policy delivery function, PDF), and a policy enforcement function (policy enforcement function, PEF). A policy architecture that originally includes the PCF, the session management function (session management function, SMF)/access and mobility management function (access and mobility management function, AMF), and a user plane function (UPF) may still be used to serve a connection policy.

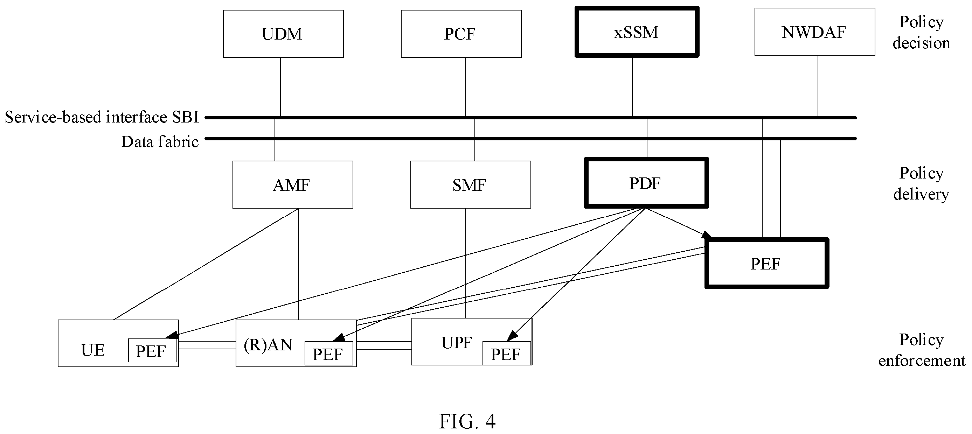

FIG. 4 shows a possible and non-limiting unified policy architecture according to an embodiment of this application. As shown in FIG. 4, the policy architecture includes unified data management (unified data management, UDM), a policy control function PCF, a network data analytics function (network data analytics function, NWDAF), an access and mobility management function AMF, a session management function SMF, user equipment (user equipment, UE), a (radio) access network (radio access network, (R)AN), and a user plane function UPF.

In addition, in the policy architecture, a function/network element for providing a beyond-connectivity policy service is added, including: a beyond-connectivity policy decision function, a beyond-connectivity policy delivery function (PDF in FIG. 4), a beyond-connectivity policy enforcement function (PEF in FIG. 4), and a beyond-connectivity management function (for example, service subscriber management (x service subscriber management, xSSM) in FIG. 4).

The beyond-connectivity policy decision function may obtain user subscription information of a service (beyond-connectivity service), and the like from the beyond-connectivity management function, formulate a policy of the service based on the user subscription information, and the like of the service, and then send the policy of the service to the beyond-connectivity policy delivery function. The beyond-connectivity policy delivery function may generate a policy parameter of a specific service dimension based on the policy of the service and information such as an actual requirement of the service and a network status, and then send the policy parameter of the specific service dimension to the policy enforcement function for enforcement.

In the foregoing, the beyond-connectivity policy decision function may be integrated or built in the policy control function PCF in FIG. 4, or may be an independent NF or network element. This is not limited herein. If the beyond-connectivity policy decision function is integrated or built in the policy control function PCF, it is equivalent to that a policy decision function for a new service (for example, security, data, and sustainability) is added to the PCF based on an existing function.

The following describes in detail network elements/functions/apparatuses in the policy architecture shown in FIG. 4.

Functions of UDM include: managing a user subscription context, being responsible for managing subscription data of UE, and being responsible for notifying a corresponding network element when the subscription data is modified.

Functions of NWDAF include: collecting data from an NF (for example, an SMF, a UPF, or an AMF), an application function (application function, AF), and an operation, administration, and maintenance (operation, administration, and maintenance, OAM) system of an operator network, analyzing the collected data, and feeding back an analysis result to the NF and the AF for subsequent processing.

Functions of the AMF include: access management and mobility management of UE, and being responsible for UE status maintenance, UE reachability management, mobility management (mobility management, MM), non-access stratum (non-access stratum, NAS) message forwarding, session management (session management, SM), N2 message forwarding, and the like.

Functions of the SMF include: allocating a resource to a session of UE and releasing a resource. The resource includes session quality of service (quality of service, QoS), a session path, a forwarding rule, or the like. The SMF is responsible for selecting or reselecting a UPF, and allocating an internet protocol (Internet protocol, IP) address, and is further responsible for establishing, modifying, and releasing a bearer, and the like.

User equipment UE: The user equipment may be a terminal device. The terminal device may communicate with a core network via an access network AN. The terminal device may include an access terminal, a subscriber unit, a subscriber station, a mobile station, a mobile station, a remote station, a remote terminal, a mobile device, a user terminal, a terminal, a wireless communication device, a user agent, or a user apparatus. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device, another processing device connected to a wireless modem, a vehicle-mounted device, a wearable device, a terminal in various communication networks (for example, a 6G communication network) that evolve after 5G, or the like.

Functions of the (R)AN include: being mainly responsible for providing a wireless connection for the terminal device, ensuring reliable transmission of uplink and downlink data of the terminal device, and the like.

In a possible scenario, an access network device may be a base station (base station), an evolved NodeB (evolved NodeB, eNodeB), a transmission and reception point (transmission and reception point, TRP), a transmission point (transmission point, TP), a next-generation NodeB (next-generation NodeB, gNB), a next-generation NodeB in a 6th generation (6th generation, 6G) mobile communication system, a base station in a future mobile communication system, a satellite, an access point (access point, AP) in a Wi-Fi system, an integrated access and backhaul (integrated access and backhaul, IAB) node, or a network device in a non-terrestrial communication network (non-terrestrial network, NTN) communication system of a mobile switching center, and may be deployed on a high-altitude platform, a satellite, or the like. The access network device may be a macro base station, a micro base station, or an indoor station, a relay node or a donor node, or a radio controller in a cloud radio access network (cloud radio access network, CRAN) scenario. Alternatively, the access network device may be a device that functions as a base station in device to device (device to device, D2D) communication, internet of vehicles communication, uncrewed aerial vehicle communication, or machine to machine communication. Optionally, the access network device may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of access network devices cooperate to assist the terminal in implementing radio access, and different access network devices each implement a part of functions of a base station. For example, the access network device may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH). It may be understood that the access network device may be a CU node, a DU node, or a device including a CU node and a DU node. In addition, the CU may be classified as a device in a radio access network RAN, or the CU may be classified as a device in a core network (core network, CN). This is not limited herein.

In different systems, the CU (or the CU-CP and the CU-UP), the DU, or the RU may also have different names, but a person skilled in the art may understand meanings thereof. For example, in an open radio access network (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

Functions of the UPF include a user plane function network element of the terminal device, and main functions include packet routing and forwarding, quality of service (quality of service, QoS) processing of user plane data, and the like. In a possible implementation, a plurality of session anchors UPFs may be inserted into a user plane path of one protocol data unit (protocol data unit, PDU) session, to support a connection to a local data network (data network, DN), so that the terminal device can access an application in the local DN nearby. Specifically, a plurality of UPFs may be included between the terminal device and the DN. A part of the UPFs may serve as an uplink classifier (uplink classifier, ULCL) or a branching point (branching point, BP), and a part of the UPFs may serve as a PDU session anchor (PDU session anchor, PSA).

Functions of xSSM include functions such as storage/management of user subscription information of a service, a registration request of a new user, and service subscription.

Herein, x may be used to represent a corresponding service, and x may be a name, a code, or the like of the service. For example, x is sensing Sensing, artificial intelligence AI, or data Data. When xSSM is Sensing SSM, it indicates user management of a sensing service. When xSSM is AI SSM, it indicates user management of an artificial intelligence service.

In this embodiment of this application, xSSM may be co-located with the unified data management function UDM, or xSSM may be co-located with another storage/management network element, or xSSM may be deployed standalone. This is not limited herein.

Functions of the PDF include: generating a policy parameter corresponding to a specific service dimension (for example, each data pipeline) based on a policy of a service from the PCF and information such as an actual requirement of the service and a network status, and sending the policy parameter to the PEF for execution.

For example, the functions of the PDF may include: 1. If the PDF is disposed in a DO/DC, the DO/DC chooses to establish a data bearer based on a service and a PCF policy, and determines a source node and a destination node, and the PDF separately delivers an establishment policy of a to-be-established pipeline with a DPID to (uplink and downlink) PEFs of the source node and the destination node. 2. A data transmission policy, a charge mode, an access policy when a user is in arrears, an incentive policy, and the like are generated and included (a policy of a service dimension is determined by the PCF, and the PDF determines management/policy specific to each data pipeline DP and delivers the management/policy to the PEF for enforcement). 3. The PDF determines a quality of service value of the service, and delivers the quality of service value to the PEFs of the source node and the destination node that correspond to a data bearer of the service.

In this embodiment of this application, the PDF may be deployed standalone, or may be deployed inside any one of a data controller (data controller, DC), a sensing service control function (sensing service control function, SSCF), a task anchor/task scheduler (task anchor/task scheduler, TA/TS), or the like, or may be co-located in a same apparatus with any one of a data controller (DC), a sensing service control function (SSCF), a task anchor/task scheduler (TA/TS), or the like. This is not limited.

In the foregoing, as a function in a data plane architecture, the DC (or DO) may be configured to: collect a capability reported by an underlying data agent (DA), select a proper DA based on a service requirement and the capability reported by the DA, and orchestrate a data bearer, including a topology structure, a function of each node, and the like, to complete the service. In a possible implementation, the DC may be deployed in the access network (which may be referred to as a data controller RAN-DC of a radio access network), or may be deployed in the core network (which may be referred to as a data controller CN-DC of the core network). This is not limited herein.

The SSCF is a function in a sensing architecture. Functions of the SSCF include: receiving capability registration of a sensing entity, and controlling and orchestrating a sensing service. The SSCF may communicate with another network function NF through a service based interface (service based interface, SBI). In a possible implementation, when a sensing data service architecture is constructed based on the data plane function architecture shown in FIG. 1, to provide a data service for the sensing service, the SSCF may be equivalent to the DO/DC in the data plane function architecture.

The TA/TS is a core function in a task architecture. The task architecture uses a task as a central mechanism. The task can be defined and can be completed through cooperation by using four elements: computational power, an algorithm, data, and a connection. The TA/TS is configured to: decompose the task into one or more subtasks, and orchestrate and schedule resources of the four elements to complete the task.

For example, after receiving a decision rule from the PCF, the PDF directly generates a specific policy parameter of a service dimension based on the decision rule of the PCF, or the PDF generates a specific policy parameter of a service dimension based on a decision rule of the PCF and orchestration and control requirements of the DC, the SSCF, the TA/TS, and the like, and then delivers the specific parameter to the PEF. In addition, the PDF may directly deliver the specific parameter to an independent PEF, or transparently transmit the specific parameter to a built-in PEF through a network element. For example, the PDF transparently transmits the specific parameter to a built-in PEF of the UPF through the SMF, the PDF transparently transmits the specific parameter to a built-in PEF of the RAN through the AMF, and the PDF transparently transmit the specific parameter to a built-in PEF such as the UE through a non-access stratum NAS message. This is not limited. The PDF may be a RAN-DC or a CN-DC. In this way, the PDF may sense a resource change based on real-time information reported by the DA, and perform real-time policy updating, thereby implementing integration of a communication network and a service and dynamic self-adaptation, and QoS supports cross-layer and cross-domain connection.

Functions of the PEF include: The PEF receives a policy parameter delivered by the PDF, collects and processes service data, and the like.

In this embodiment of this application, the PEF may be deployed standalone, or may be built in the UE, the RAN node, the UPF, or the like. This is not limited herein.

For example, in a sensing architecture, a sensing data processing function (sensing data processing function, SDPF) is used to implement a data plane function of the sensing service. For example, the SDPF is used to process sensing data of the sensing service, so as to obtain a sensing result of the sensing service. Therefore, the PEF may also be built or integrated in the SDPF. In a possible implementation, when a sensing data service architecture is constructed based on the data plane function architecture shown in FIG. 1, to provide a data service for the sensing service, the SDPF may be equivalent to the DA in the data plane function architecture.

The PEF is executed from a service dimension. One service is provided with a bearer service by one data bearer, and an identifier corresponding to the data bearer may be a data service task identifier (DSID). One data bearer may include one or more data pipelines, and each data pipeline is correspondingly identified by using one DPID. A minimum granularity of PEF policy enforcement is a data pipeline (in other words, a data pipeline is a basic unit of PEF policy enforcement).

Data pipelines (with a same DPID) that have a same quality of service QoS requirement and belong to a same service between the source node and the destination node are a minimum granularity of quality of service QoS processing. Quality of service QoS of the data pipeline may be controlled by the PDF, or may be preconfigured, or may be determined or established in a data pipeline IP address (DPIP) establishment process or a data pipeline IP address (DPIP) modification process. This is not specifically limited herein.

In this embodiment of this application, there is terrestrial side mapping and air interface bearer mapping on the PEF side, which are specifically as follows:
1. Terrestrial side mapping: mapping from a data pipeline (data pipeline) to a tunnel (tunnel) (two ends on a terrestrial side); and 2. Air interface bearer mapping: mapping from a data pipeline (data pipeline) to a data radio bearer DRB (namely, mapping between two ends of an air interface).

In this embodiment of this application, when a tunnel tunnel is established, a source end may add a QoS identifier/label to a corresponding protocol layer of data based on a transmission protocol. In addition, there may be a plurality of DRBs from a terminal to an air interface, and a correspondence between a DRB and a service (or a data pipeline) may be 1:N.

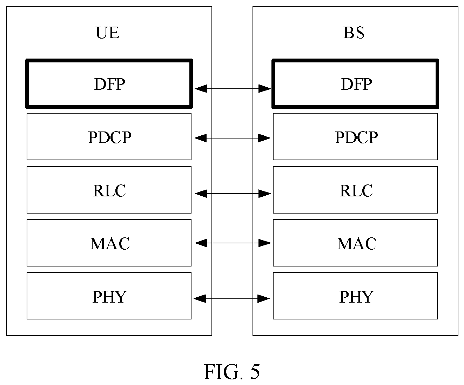

FIG. 5 shows a location of a data forwarding protocol (data forwarding protocol, DFP) layer in a data plane protocol stack. As shown in FIG. 5, the data plane protocol stack may include a data forwarding protocol DFP layer, a packet data convergence protocol (packet data convergence protocol, PDCP) layer, a radio link control (radio link control, RLC) layer, a medium access control (medium access control, MAC) layer, and a physical (physical, PHY) layer. The DFP layer includes the following two functions:

Function 1: A DFP layer of a transmitting end (or a source end) may add a QoS identifier/label corresponding to a data pipeline, and the like to an uplink data packet or a downlink data packet, for example, a QoS ID. Correspondingly, a DFP layer of a receiving end (or a destination end) may read the QoS identifier/label from the uplink data packet or the downlink data packet. Function 2: One or more data pipelines (data pipelines) are mapped to one data radio bearer (DRB).

For example, for the downlink data packet, if a source end PEF sends the downlink data packet to a destination end UE, or a source end RAN1 node sends the downlink data packet to a destination end RAN2 node, or a source end NF1 node sends the downlink data packet to a destination end NF2 node, a DFP layer of the source end PEF, RAN1 node, or NF1 adds the QoS identifier/label to the downlink data packet, and sends the downlink data packet carrying the QoS identifier/label.

In addition, if an intermediate end at which the downlink data packet carrying the QoS identifier/label arrives is a RAN node, two-level mapping (namely, terrestrial side mapping and air interface bearer mapping) is performed on a RAN side.

For the uplink data packet, if a source end UE sends the uplink data packet to a destination end PEF, the UE adds the QoS identifier/label to the uplink data packet (or a packet header of the uplink data packet). If a source end RAN node sends the uplink data packet to a PEF, the RAN node adds the QoS label/label to the uplink data packet (or a packet header of the uplink data packet).

In addition, if an intermediate end at which the uplink data packet carrying the QoS identifier/label arrives is a RAN node, two-level mapping (namely, terrestrial side mapping and air interface bearer mapping) is performed on a RAN side.

In this embodiment of this application, the data radio bearer may also be referred to as a data air interface bearer or another name. This is not limited herein. The terrestrial side mapping and the air interface bearer mapping may alternatively be named with other names. For example, the air interface bearer mapping may be referred to as air interface mapping. This is not limited. A corresponding replacement may be performed based on an application scenario, provided that consistent essential content is expressed.

A PCF is used to provide user policy management, and generate and manage a user, a session, and a QoS flow processing policy. The PCF can further provide a policy decision for a new service (security, data, sustainability, or the like).

Specifically, the PCF not only has policy decision functions for connection, charging, and access (for example, AM access management and UE access policy management), but also introduces policy decision functions for services such as data (for example, sensing, AI, a network, IoT, and machine type data), security, and sustainability.

For example, as shown in Table 1, policy content that can be formulated/decided by the PCF not only includes connection, charging, and access policies, but also includes data, security, and sustainability policies. Each policy separately corresponds to an input source of the policy and an output of the policy. For each policy, the PCF may obtain input information of the policy from the corresponding input source, perform policy computation based on the input information of the policy, and determine the corresponding output of the policy.

For connection policies (for example, connection+charging+access policies), the PCF may obtain user subscription information from UDM, calculates an internet access quality guarantee for a user, and matches a "rule". The "rule" carries a QoS parameter of a user access service determined by the PCF. The PCF may also dynamically adjust a policy parameter based on a real-time analysis result of an NWDAF for a network status, and deliver the policy parameter to an SMF/AMF, a UPF, or UE.

For a beyond-connectivity policy (namely, a policy other than the connection, charging, and access policies, for example, the data, security, and sustainability policy), the PCF may obtain user subscription information of a service from xSSM, calculate a quality of service index for the service, and deliver the quality of service index to a PDF. Then, the PDF generates a policy parameter of a specific service dimension based on an actual requirement of the service, and delivers the policy parameter to each PEF. For example, the PDF delivers the policy parameter of the service dimension together with a match and action (match and action, M&A) mechanism. The PCF may also dynamically adjust the policy parameter from the service dimension based on a real-time analysis result of an NWDAF for a network status, and deliver the policy parameter to each PEF. In this application, the M&A mechanism means that at least one collection/filtering condition and an action corresponding to each collection/filtering condition are set in a data orchestrator DO or a data controller DC, M&A is delivered to a data processing node, and a corresponding action is performed when a data packet matches a collection/filtering condition.

**Table 1**

| | | |
|---|---|---|
| Policy content | Input source of a policy (also referred to as an input source of policy computation) | Output of the policy (also referred to as an output of policy computation) |
| Connection+chargi ng+access (AM and UE) | The input source of the policy is UDM (traffic package, monthly traffic package, gift package offer, and the like). Input information of the policy may include at least one of the following: a location area (for example, a hotspot, a central business district, or an office area) of a user; a terminal type (for example, a mobile phone, a tablet computer, or a computer); a user level (for example, a very important person (VIP) and common); a service type (for example, Internet browsing, video, email, and voice); a time period (for example, morning, evening, holiday, and weekend); and an analysis result of an NWDAF (for example, load level information Load level information, service experience Service experience, network performance Network performance, and abnormal behavior Abnormal behavior). | Internet access quality guarantee for a user, and a matched "rule": The "rule" carries a quality of service QoS parameter that is of a user access service determined by a PCF, and may include at least one of the following: a session management SM policy: a session aggregate maximum bit rate (Session- AMBR), a 5QI, an address resolution protocol (ARP), or the like; an access management AM policy: service area restriction, radio frequency selection, and a priority of radio frequency selection; and a UE policy: route selection and network selection policies. For a corresponding service scenario, the rule may include the following: a bandwidth control parameter, a charging action (for example, rate A→rate B), a message notification, redirection, or the like. |
| Data (for example, sensing, AI, a network, IoT, and machine data) | The input source of the policy is xSSM. Input information of the policy may include the following: 1. a subscription body: an individual user, an enterprise user, and an operator; 2. sensing data: a sensing area location, a collection device type, a user level, a time period, and a service type; 3. AI data: a data type (for example, a type such as a model or a dataset); 4. network data: a network bandwidth, a throughput, a delay, and the like; and 5. an analysis result of an NWDAF. | The input source of the policy is xSSM. Sensing policy, which may include at least one of the following: area restriction, a size, real-time, a collection policy, and a forwarding policy; AI policy, which may include at least one of the following: a model size, model cutting, an intermediate parameter, and a forwarding policy; and Data policy, which may include at least one of the following: a data security level, a privacy level, area restriction, a collection policy, and a forwarding policy. |
| Security | 1. The input source of the policy is UDM, and input information of the policy may include: integrity and/or privacy protection activation based on an air interface between UE and a base station, and a UE level. 2. The input source of the policy is an SMF, and input information of the policy may include a locally preconfigured user plane security policy. 3. The input source of the policy is an NWDAF, and input information of the policy may be an analysis result of an NWDAF. The analysis result of the NWDAF can trigger a change in a security policy, for example, moving a security-damaged slice to an isolated slice, and subscribing to a security event notification by a PCF, for example, a denial of service (denial of service, DoS) attack. | Security policy, which may include at least one of the following: Integrity, and whether to perform privacy protection, for example, strong encryption algorithms or longer encryption keys in some service flows; |
| Sustainability | The input source of the policy is a user/terminal, for example, an enterprise-level user/tenant. The input information of the policy may include: 1. transmission energy consumption, calculation energy consumption, an idle time period, and the like; and 2. an analysis result of an NWDAF for network traffic or a node. | Sustainability policy, which may include at least one of the following: data transmission and computation policies, site/network node power-off time, and the like |

Table 1 is merely presented as an example of a part of policy content for description. Actually, the policy architecture provided in this embodiment of this application may further include more or less policy content. Details are not described herein again.

FIG. 4 is merely an example of the policy architecture provided in this embodiment of this application. Compared with the policy architecture shown in FIG. 4, the policy architecture provided in this embodiment of this application may actually further include more or fewer function network elements. This is not limited. The policy architecture provided in this embodiment of this application may be further applied to another communication network/system/scenario. If the policy architecture is applied to another communication network/system/scenario, all or a part of function network elements shown in FIG. 4 may be correspondingly replaced. In addition, the function network element in the policy architecture in this embodiment of this application may also be represented by using another name. This is not limited herein.

The foregoing describes in detail the policy architecture provided in embodiments of this application. The policy architecture and the service scenario described in embodiments of this application are intended to describe the technical solutions in embodiments of this application more clearly, and do not constitute a limitation on the technical solutions provided in embodiments of this application. A person of ordinary skill in the art may know that with the evolution of the network architecture and the emergence of new service scenarios, the policy architecture provided in embodiments of this application is also applicable.

In embodiments of this application, a part of scenarios is described by using a scenario of a 5G/6G communication network in a wireless communication network as an example. It should be noted that the solution in embodiments disclosed in this application may be further applied to another wireless communication network, and a corresponding name may also be replaced with a name of a corresponding function in the another wireless communication network.

The following describes the technical solutions in this application with reference to specific embodiments.

An embodiment of this application provides a service policy determining method. The method may be applied to but is not limited to the policy architecture shown in FIG. 4. The method may be performed by a first function network element, a second function network element, and an execution node (for example, a first source node); or the method may be performed by a component (a module, a chip, or the like) corresponding to the first function network element, the second function network element, and the execution node; or the method may be performed by an apparatus correspondingly used together with the first function network element, the second function network element, and the execution node. It may be understood that a specific structure of an execution body of the method provided in this embodiment of this application and a quantity of execution bodies are not specifically limited in this application, provided that a program that records code of the method provided in this embodiment of this application can be run to perform communication according to the method provided in this embodiment of this application. Interaction among the first function network element, the second function network element, and the first source node is used as an example for description below. A sequence of steps in the following procedures is merely an example. During actual application, the sequence of steps in the procedures may be adjusted.

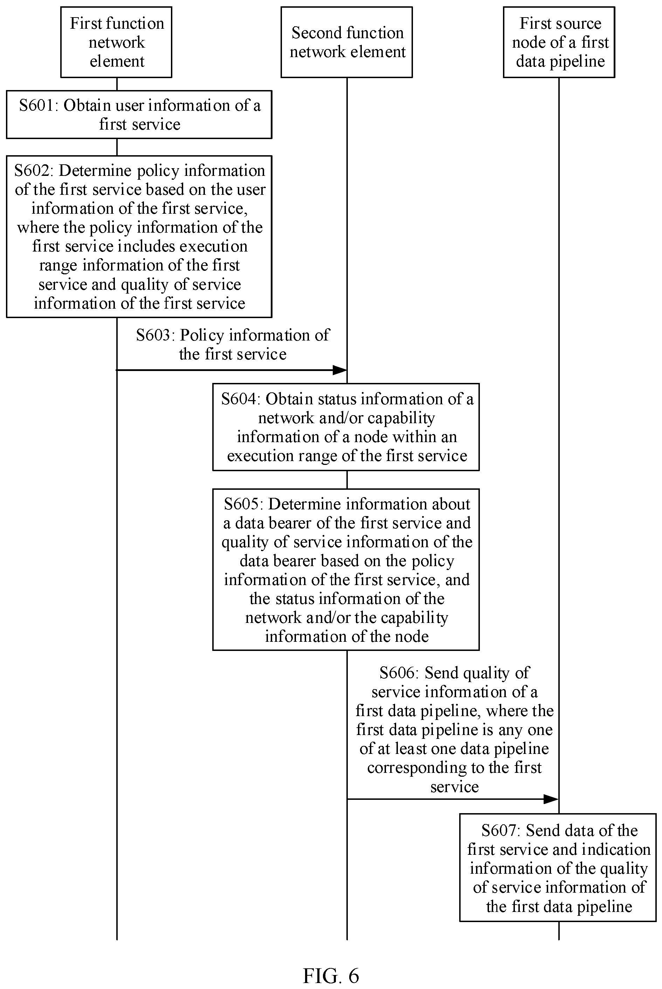

As shown in FIG. 6, a specific procedure of the method is as follows:
S601: The first function network element obtains user information of a first service.

In this embodiment of this application, the first function network element may be deployed standalone in a network, or the first function network element is co-located with a policy control function network element in a network, or the first function network element may be a policy control function network element. This is not limited herein.

In addition, the first service may be but is not limited to one or more of a sensing service, an artificial intelligence service, a network service, an internet of things service, a security service, and a sustainability service.

For example, the sensing service may include services such as identification, speed measurement, ranging, and target positioning. The artificial intelligence service may include abnormality detection, an intelligent service, intelligent orchestration and scheduling, an intelligent agent, and the like. The network service may include a service of a network operator, for example, services such as network optimization, maintenance, operation, and construction. The internet of things service may include a service such as an autonomous driving or intelligent transportation system that needs to analyze data generated by a sensor, a machine in an IoT, a connected device or a facility in an internet of vehicles, or the like. The security service may include services such as security protection and privacy protection for a network element, a network, a system, and the like. The sustainability service may include services such as network energy saving and sustainability.

In a possible implementation, the user information of the first service may include but is not limited to one or more of user subscription information of the first service, user registration information of the first service, and service subscription information of the first service.

In a possible implementation, that the first function network element obtains the user information of the first service includes: The first function network element obtains the user information of the first service from a service user management network element; and the service user management network element may be deployed standalone in a network, or the service user management network element is co-located with a data storage network element, or the service user management network element is a data storage network element. For example, the data storage network element may be a unified data management UDM network element.

For example, service user management (or the service user management network element) may be represented as xSSM, and x may represent a corresponding service. For example, user management of a sensing service is represented as sensing SSM, user management of an AI service is represented as AI SSM, and user management of a data service is represented as data SSM.

S602: The first function network element determines policy information of the first service based on the user information of the first service, where the policy information of the first service includes execution range information of the first service and quality of service information of the first service.

For example, the user information of the first service may be equivalent to the input information of the policy provided by the input source of the policy in Table 1. The policy information of the first service may be equivalent to the output of the policy in Table 1.

In this embodiment of this application, an execution range of the first service may be a network area in which the first service is executed, or may be a candidate node corresponding to the first service, or may be a candidate data pipeline corresponding to the first service. This is not specifically limited herein. In addition, none of a quantity of network areas in which the first service is executed, a quantity of candidate nodes corresponding to the first service, and a quantity of candidate pipelines corresponding to the first service is limited. In addition, the execution range information of the first service may include one or more of information about a network area, information about a candidate node, and information about a candidate data pipeline that are of the first service. A specific form of the execution range information of the first service may be information, a list, or the like.

For example, the execution range information of the first service is a list of network areas in which the first service is executed, and the list may include one or more areas.

In a possible implementation, quality of service of the first service may include but is not limited to one or more of bandwidth information of the first service, priority information of the first service, delay information of the first service, delay change information of the first service, security level information of the first service, privacy level information of the first service, transmission rate information of the first service, routing information of the first service, and key information (for example, a length and a type of a key) used for the first service.

For example, the bandwidth information of the first service may include a type (for example, an uplink bandwidth or a downlink bandwidth) of a bandwidth occupied by the first service, and a bandwidth size. The delay information of the first service may include a maximum or minimum transmission delay (or a calculation delay, a collection delay, or the like) supported for data/information of the first service. The delay change information of the first service may include an offset of the transmission delay (or an offset of the calculation delay, an offset of the collection delay, or the like) supported for the data/information of the first service. The transmission rate information of the first service may include a maximum or minimum rate, or the like for transmitting the data/information of the first service. The routing information of the first service may include path information (for example, an address of an involved node or interface) for transmitting the data of the first service, and the like. The key information used for the first service may include a key type, a key length, and the like that are used for encrypting or decrypting the data/information of the first service. The priority information of the first service may include a priority of transmitting or processing the data/information of the first service. The privacy level information of the first service may include a privacy security level, a privacy risk level, or the like of the data/information of the first service.

In a possible implementation, the policy information of the first service may further include but is not limited to one or more of collection policy information of the first service, forwarding policy information of the first service, computation policy information of the first service, and security policy information of the first service. This is not limited herein.

For example, the collection policy information of the first service may include a collection channel, a collection manner, and the like of the data of the first service. The forwarding policy information of the first service may provide a composition policy for implementing a data bearer of the first service, and may include topology information such as a source node, a destination node, an intermediate node, and a data pipeline, and policies such as bandwidth and a delay required for data flowing. The computation policy information of the first service may include an algorithm or a method used for computation, a participating node for computation, time consumed for computation, and the like. The security policy information of the first service may include integrity of the first service, whether to perform privacy protection on the data/information of the first service, and the like.

S603: The first function network element sends the policy information of the first service to the second function network element. Correspondingly, the second function network element receives the policy information of the first service.

In this embodiment of this application, the second function network element may be deployed standalone in a core network, an access network, or a network management system, or the second function network element is co-located with the first service network element. The first service network element may be but is not limited to any one of the following:
a data controller DC (for example, a DC in the access network or a DC in the core network), a sensing service control function, a task anchor, and a task scheduler.

S604: The second function network element obtains status information of a network and/or capability information of a node within an execution range of the first service.

For example, the status information of the network in the execution range of the first service may include status information of each node, each link, and the like in the execution range. For example, the status information of the node/link may include an address of the node/link, a load status of the node/link, whether the node/link is occupied, or whether the node/link is stable/healthy. The capability information of the node may include a service capability, a computational capability, and the like of the node. This is not limited herein.

In this embodiment of this application, when the execution range of the first service includes a status of the network area in which the first service is executed, the second function network element obtains status information (for example, network load and link load) of a network in the network area and/or capability information of each node (for example, a service capability and a computational capability of the node) in the network area. When the execution range of the first service includes a status of the candidate node corresponding to the first service, the second function network element may obtain status information of the candidate node (for example, load of the node and whether the node is robust) and/or capability information of the candidate node (for example, a service capability and a computational capability of the node). When the execution range of the first service includes a status of the candidate pipeline corresponding to the first service, the second function network element may obtain status information and/or capability information of each node (for example, one or more of a source node, an intermediate node, and a destination node) corresponding to the candidate data pipeline, and may further obtain status information of the candidate data pipeline (for example, load of the data pipeline, and whether the data pipeline is robustness). The second function network element may flexibly obtain the status information of the network and/or the capability information within the execution range of the first service based on the actual policy information of the first service. This is not specifically limited herein.

S605: The second function network element determines information about a data bearer of the first service and quality of service information of the data bearer based on the policy information of the first service, and the status information of the network and/or the capability information of the node.

The information about the data bearer may include information about at least one data pipeline within the execution range of the first service, and the quality of service information of the data bearer may include quality of service information corresponding to each of the at least one data pipeline. The at least one data pipeline may be used to carry/transmit the data of the first service.

In a possible implementation, that the second function network element performs S605 may include: determining, based on the execution range information of the first service, and the status information of the network and/or the capability information of the node, information about a destination node and information about a source node that correspond to each of the at least one data pipeline within the execution range of the first service; and then determining, based on the quality of service information of the first service, and the status information of the network and/or the capability information of the node, the quality of service information corresponding to each of the at least one data pipeline.

In this embodiment of this application, information about each data pipeline includes information about at least one destination node and information about at least one source node. Optionally, information about any one or more of the at least one data pipeline further includes information about at least one intermediate node.

For example, information about each node may be address information of the node, or identification information of the node.

In this embodiment of this application, the source node, the destination node, or the intermediate node each may be considered as a policy enforcement function network element. The policy enforcement function network element may be deployed standalone in the network and serve a second service network element, or the policy enforcement function network element may be deployed in a second service network element. The second service network element may be but is not limited to a terminal, a radio access network node, an access and mobility management function, a session management function, a unified data repository, a user plane function, or a sensing data processing function.

In this embodiment of this application, quality of service information corresponding to each data pipeline may include but is not limited to bandwidth information of the data pipeline, priority information of the data pipeline, delay information of the data pipeline, delay change information (for example, a delay change quantity and a delay jitter quantity) of the data pipeline, security level information of the data pipeline, privacy level information of the data pipeline, transmission rate information of the data pipeline, routing information of the data pipeline, and key information correspondingly used for the data pipeline. In a possible implementation, the second function network element may further determine one or more of collection policy information, forwarding policy information, computation policy information, and security policy information that correspond to the data pipeline.

In a possible implementation, the method further includes: The second function network element separately sends, based on the information about the at least one source node corresponding to each data pipeline, quality of service information corresponding to the data pipeline to the at least one source node. The information about the source node may be node address information, a node identifier, or the like. This is not limited herein.

S606 and S607 are described by using the first source node of the first data pipeline corresponding to the first service as an example. For another source node of the first data pipeline or a source node of another data pipeline, refer to implementation of the steps performed by the first source node. Details of all source nodes are not described in embodiments of this application.

S606: The second function network element sends quality of service information of the first data pipeline to the first source node of the first data pipeline, where the first data pipeline is any one of at least one data pipeline corresponding to the first service.

For example, the second function network element sends a quality of service QoS value of the first data pipeline to the first source node based on address information of the first source node of the first data pipeline.

S607: The first source node sends the data of the first service and indication information of the quality of service information of the first data pipeline.

In this embodiment of this application, that the first source node sends the data of the first service and the indication information of the quality of service information of the first data pipeline may include but is not limited to the following several implementations:
Implementation 1: When the first source node is deployed in a first radio access network node, that the first source node sends the data of the first service and the indication information of the quality of service information of the first data pipeline may include: The first source node maps the first data pipeline to a corresponding first communication tunnel; and sends the data of the first service and the indication information of the quality of service information of the first data pipeline to a second radio access network node or a core network element through the first communication tunnel. The second radio access network node (or the core network element) may be a destination node or an intermediate node corresponding to the first data pipeline.

In this embodiment of this application, at least one communication tunnel (including the first communication tunnel) may be established in advance, or may be established in real time. This is not limited herein. The first source node may find, through matching, a corresponding communication tunnel based on the quality of service information of the first data pipeline.

For example, a quality of service QoS value or a quality of service QoS range corresponding to each of at least one communication tunnel (including the first communication tunnel) is preset. If a quality of service QoS value of the first data pipeline is a quality of service QoS value corresponding to the first communication tunnel, or a quality of service QoS value of the first data pipeline falls within a quality of service QoS range corresponding to the first communication tunnel, it is determined that a communication tunnel matching the first data pipeline is the first communication tunnel.

In a possible implementation, the first communication tunnel may further correspond to a second data pipeline, and the second data pipeline is used to carry/transmit data of a second service.

In this embodiment of this application, data pipelines of a same service may correspond to a same communication tunnel, or may correspond to different communication tunnels, and data pipelines of different services may correspond to different communication tunnels, or may correspond to a same communication tunnel. This is not limited herein.

Implementation 2: When the first source node is deployed in a terminal, that the first source node sends the data of the first service and the indication information of the quality of service information of the first data pipeline may include: The first source node maps the first data pipeline to a corresponding first data radio bearer; and then sends the data of the first service and the indication information of the quality of service information of the first data pipeline to a radio access network node through the first data radio bearer. The radio access network node may be a destination node or an intermediate node corresponding to the first data pipeline.

In this embodiment of this application, at least one data radio bearer (including the first data radio bearer) may be established in advance, or may be established in real time. This is not limited herein. The first source node may find, through matching, a corresponding data radio bearer based on the quality of service information of the first data pipeline.

For example, a quality of service QoS value or a quality of service QoS range corresponding to each of the at least one data radio bearer (including the first data radio bearer) is preset. If a quality of service QoS value of the first data pipeline is a quality of service QoS value corresponding to the first data radio bearer, or a quality of service QoS value of the first data pipeline falls within a quality of service QoS range corresponding to the first data radio bearer, it is determined that a data radio bearer matching the first data pipeline is the first data radio bearer.

In a possible implementation, the first data radio bearer may further correspond to a second data pipeline, and the second data pipeline is used to carry/transmit data of a second service.

In this embodiment of this application, data pipelines of a same service may correspond to a same data radio bearer, or may correspond to different data radio bearers, and data pipelines of different services may correspond to different data radio bearers, or may correspond to a same data radio bearer. This is not limited.

In this embodiment of this application, the data of the first service and the indication information (for example, an identifier, a label, or a name of the quality of service information) of the quality of service information of the first data pipeline may be sent in a same data packet or message, or may be sent in different data packets/messages. This is not limited herein. In addition, the indication information of the quality of service information of the first data pipeline may be a value corresponding to the quality of service information of the first data pipeline, or may be identification information (for example, an identifier ID, a label, or a name) used to identify the quality of service information of the first data pipeline. This is not specifically limited either.

In conclusion, this embodiment of this application provides a service policy determining method. The method includes: The first function network element obtains the user information of the first service; and determines the policy information of the first service based on the user information of the first service. The policy information of the first service includes the execution range information of the first service and the quality of service information of the first service. Then, the first function network element sends the policy information of the first service to the second function network element. It can be learned that in the method, the first function network element determines policy information of each service (including quality of service information of the service and an execution range of the service) from a service dimension. Therefore, policies can be provided for various services (including a new service of a communication network service), and policy requirements of various services (including the new service of the communication network service) can be met.

Based on the service policy determining method described in FIG. 6, the following further describes in detail by using several specific implementations.

### Implementation 1:

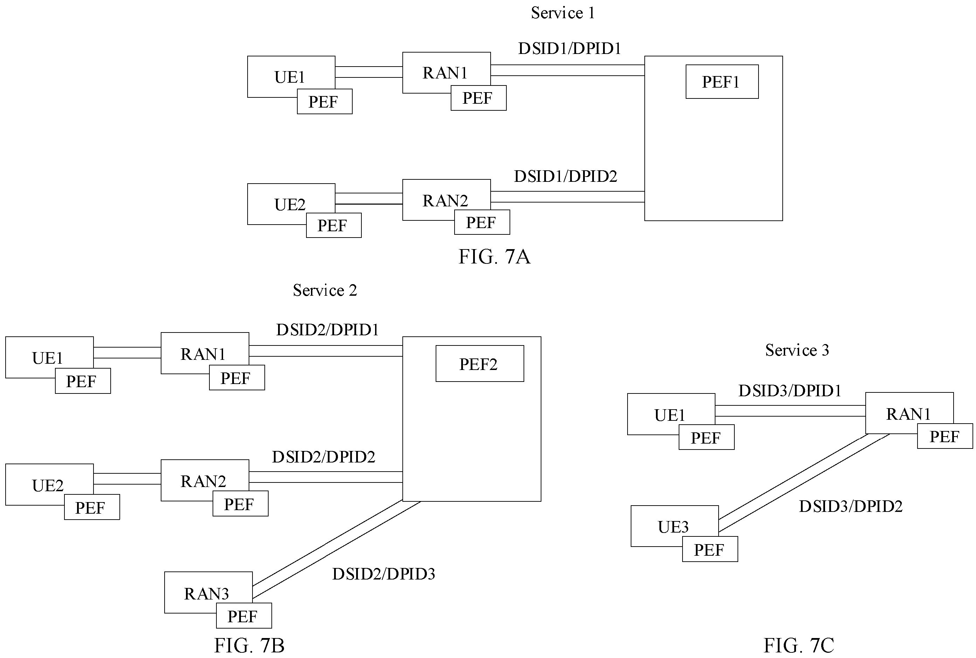

In Implementation 1, a policy and mapping of a service in this embodiment of this application are mainly described in detail mainly through comparison with a 5G policy architecture. Three services are used as an example. FIG. 7A to FIG. 7C are diagrams of examples of policies of three service dimensions. As shown in FIG. 7A, an ID of a service 1 is DSID1, the service 1 corresponds to two data pipelines (DSID1/DPID1 and DSID1/DPID2) for bearing or transmission, and IDs of the two data pipelines are DPID1 and DPID2. UE1 and UE2 are source nodes (a PEF is deployed in each UE), and PEF1 is a destination node. A quality of service value of the service 1 may be set based on a requirement of the service 1, and quality of service values of the two pipelines (DPID1 and DPID2) are set to be consistent or the same, or quality of service values of the two data pipelines (DPID1 and DPID2) may be set to be different based on an actual network status. This is not limited.

As shown in FIG. 7B, an ID of a service 2 is represented as DSID2, and the service 2 corresponds to three data pipelines (DSID2/DPID1, DSID2/DPID2, and DSID2/DPID3) for carrying/transmission. IDs of the three data pipelines are DPID1, DPID2, and DPID3. UE1, UE2, and RAN3 are source nodes (a PEF is deployed in each of each UE and RAN3), and PEF2 is a destination node.

As shown in FIG. 7C, an ID of a service 3 is represented as DSID3, the service 3 corresponds to two data pipelines (DSID3/DPID1 and DSID3/DPID2) for carrying/transmission, and IDs of the two data pipelines are DPID1 and DPID2. UE1 and UE2 are source nodes (a PEF is deployed in each UE), and a RAN1 node is a destination node (a PEF is deployed in RAN1).

It can be learned from FIG. 7A to FIG. 7C that the three services each correspond to a plurality of source nodes. In other words, there is no fixed anchor. In addition, a RAN (for example, a base station) may serve as a source node of a service, and each service can also correspond to a plurality of destination nodes, which is not shown in FIG. 7A to FIG. 7C and may be learned from FIG. 9B. In addition, it can be learned from FIG. 7A to FIG. 7C that one service corresponds to a plurality of data pipelines (or a plurality of data pipelines form one service). Therefore, in this embodiment of this application, data of one service may be transmitted or carried through one or more data pipelines. For example, a quality of service QoS flow in the 5G policy architecture is considered as a data pipeline of the service 1 shown in FIG. 7A, but the service 1 shown in FIG. 7A includes two data pipelines. It can be learned from the foregoing that, compared with transmission of the quality of service flow QoS flow in 5G, in the policy architecture shown in this embodiment of this application, a node that transmits service data is more flexible, and a granularity of transmitting the service data is finer.

In addition, a quality of service value of each service may be delivered by a PDF (an example of the second function network element in the solution in FIG. 6) to a corresponding source node based on a preset transmission mechanism (for example, an M&A mechanism). For example, for the service 2, as shown in FIG. 7B, the PDF separately determines quality of service QoS values of the three data pipelines, that is, a QoS value 1 corresponding to DPID1, a QoS value 2 corresponding to DPID2, and a QoS value 3 corresponding to DPID3. Then, the PDF sends the QoS value 1 to a source node UE1, the PDF sends the QoS value 2 to a source node UE2, and the PDF sends the QoS value 3 to a source node RAN3. After collecting data of the service 2, UE1 adds the QoS value 1 to a data packet 1 of the service 2, performs air interface mapping, and sends the data packet 1 to RAN1 through a corresponding air interface bearer (for example, DRB1). After performing tunnel mapping, the RAN1 side sends the data packet 1 to a destination node PEF through a corresponding tunnel. Similar to UE1, a source node UE2 may perform mapping transmission by referring to UE1. Because the source node RAN3 side does not involve air interface transmission, after collecting data of the service 2, RAN3 adds the QoS value 1 to a data packet 2 of the service 2. RAN3 only needs to perform tunnel mapping, and then sends the data packet 2 to the destination node PEF through a corresponding tunnel.

It can be learned from FIG. 7A to FIG. 7C that UE1 participates in three services. The following uses a mapping relationship among UE1, RAN1, and a PEF as an example for detailed description.

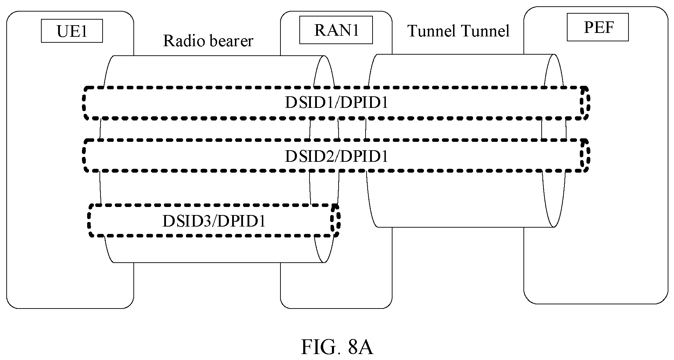

FIG. 8A shows a mapping relationship among UE1, RAN1, and a PEF. As shown in FIG. 8A, one-level mapping is performed between the PEF and RAN1, and two-level mapping is performed between the RAN1 node and UE. If quality of service values corresponding to a data pipeline 1 (DSID1/DPID1) of the service 1, a data pipeline 1 (DSID2/DPID1) of the service 2, and a data pipeline 1 (DSID3/DPID1) of the service 3 are the same, or are different but close (belong to a same range), the data pipelines may be mapped to a same radio bearer Radio Bearer. If quality of service values of data pipelines of different services differ greatly, the data pipelines may be mapped to different radio bearers Radio Bearers.

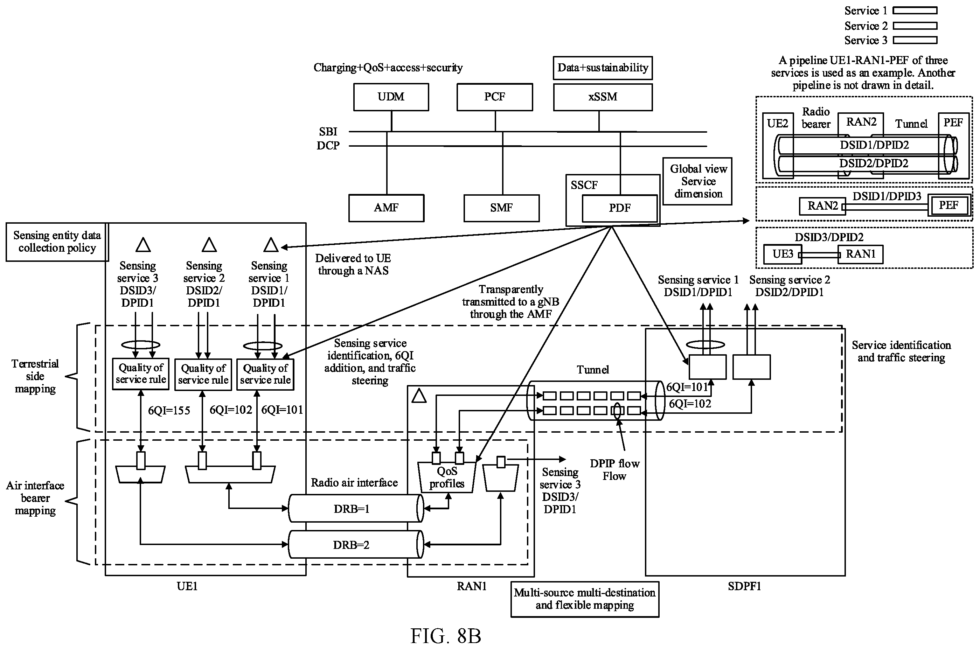

For example, UE1 participating in three sensing services is used as an example. FIG. 8B shows a specific mapping relationship among UE1, RAN1, and a PEF in a policy architecture. As shown in FIG. 8B, from a left side, a PDF sends a NAS message carrying a QoS value corresponding to a data pipeline of each service to a source node UE1, and sends a QoS value corresponding to a data pipeline of each service to a destination node (namely, RAN1 and a sensing data processing function SDPF1). In addition, the SSCF further delivers a quality of service rule QoS rule to UE1. The UE1 side performs service identification and traffic steering on collected data of the three sensing services based on the quality of service rule QoS rule (equivalent to a data packet filter), and adds a 6QI (QoS value). A data flow of each service is transmitted through a corresponding data pipeline. Air interface bearer mapping is performed on the UE1 side. To be specific, data pipelines of the three sensing services are mapped to two corresponding radio bearers Radio Bearers. For example, a data pipeline of a sensing service 1 and a data pipeline of a sensing service 2 are mapped to a same radio bearer DRB1, and a data pipeline of a sensing service 3 is mapped to another radio bearer DRB2. Data of the three sensing services is transmitted to RAN1 through two radio air interfaces (which may also be referred to as DRB1 and DRB2). Because a destination node of the sensing service 3 is RAN1, data of the sensing service 3 is no longer transmitted subsequently. For DRB1 that carries data of the sensing service 1 and data of the sensing service 2, RAN1 obtains two flows through division based on quality of service profiles QoS Profiles (the QoS profiles include quality of service parameters, and are used by a RAN to perform air interface processing), that is, a flow corresponding to the sensing service 1 and a flow corresponding to the sensing service 2, and the two flows are mapped to a tunnel corresponding to a data pipeline, and sent to SDPF1 (equivalent to that both a destination node PEF1 of the sensing service 1 and a destination node PEF2 of the sensing service 2 are deployed in SDPF1). Then, SDPF1 allocates a transmission resource (for example, a bandwidth, a delay, and a priority) to the flow of the sensing service 1 based on a QoS value corresponding to the data pipeline of the sensing service 1, and allocates a transmission resource (for example, a bandwidth, a delay, and a priority) to the flow of the sensing service 2 based on a QoS value corresponding to the data pipeline of the sensing service 2.

In FIG. 8A and FIG. 8B, UE1 participating in three services is used as an example to describe a mapping relationship among UE1, RAN1, and a PEF. For another mapping relationship executed when service data is transmitted between another source node and another destination node, refer to the foregoing. Details are not described herein again.

For example, based on the 5G policy architecture shown in FIG. 2B and the policy architecture provided in this application in FIG. 8B, in Table 2, differences between the policy architecture in this embodiment of this application and the current 5G policy architecture are separately shown in terms of policy content, a QoS granularity, a delivery point of a policy, an enforcement point of the policy, an input of the policy, service traffic steering/QoS label applying, a default bearer, and a session session.

As shown in Table 2, for the policy content, compared with the 5G policy architecture, in the policy architecture provided in this application, policy content of security+data+sustainability is added. For a quality of service QoS granularity, compared with a quality of service flow in 5G, in the policy architecture provided in this application, service data is transmitted through a data pipeline. For the delivery point of the policy, a PDF that serves a beyond-connectivity is added as a delivery point of the policy in the policy architecture provided in this application. For the enforcement point of the policy, in the policy architecture provided in this application, for beyond-connectivity part, an enforcement point of two-level mapping is a non-anchor, multi-source, and multi-destination node, and mapping is more flexible. For an input source of the policy, xSSM is added in the policy architecture provided in this application, and an NWDAF introduces functions such as network situation and security analysis, and sustainability analysis. For service traffic steering/QoS label applying, in the policy architecture provided in this application, traffic steering is performed based on a service dimension (a service executed through cooperation by a plurality of UEs, a base station, an NF, and the like). In addition, because there is a global view, indication information (for example, a QoS identifier/label) of quality of service information may be added when a data source transmission mechanism M&A is matched, and the indication information of the quality of service information may be added to a DFP data forwarding protocol. For a default bearer, compared with a PCC architecture in 5G, in the policy architecture provided in this application, there is no default bearer. For the session session, the policy architecture provided in this application may not be limited to UE-RAN-UPF, and may be further classified into UE-RAN, RAN-RAN, RAN-CN, NF-NF, and the like. Transmission is more flexible.

**Table 2**

| | 5G policy architecture | Policy architecture provided in this application |
|---|---|---|
| Policy content | Charging+QoS+access | Charging+QoS+access+security+data+sustainability |
| QoS granularity | QoS flow | Data pipeline |
| Delivery point of a policy | AMF and SMF | Connection service: AMF and SMF |
| | | (Connection+)Service: PDF |
| Enforcement point of the policy | Two-level mapping (anchor): UE, UPF, and RAN | Connection service: Two-level mapping (anchor): UE, UPF, and RAN |
| | | (Connection+)Service: Two-level mapping (non-anchor): PEF |
| | | (source node and destination node of a DPID) |
| | | Flexible mapping may be performed, and it is unnecessary to perform both levels of mapping. |
| Input source of the policy | UDM, where | |
| | analysis information (load level information, service experience, network performance, and an abnormal behavior) is obtained from an NWDAF. | UDM; and |
| | | xSSM, where |
| | | the NWDAF introduces network situation and security analysis, and sustainability analysis. |
| Service traffic steering/QoS label applying | UE dimension, where | |
| | at a service traffic steering point, a data packet filter set (packet filter set, PFS) is used to match a service packet, and a PF is a minimum service identification unit on a basis that the PF includes information such as a 5-tuple, a direction, and another IP header attribute; and | |
| | | Service dimension (services executed through cooperation by a plurality of UEs, a base station, and an NF), where |
| | | because there is a global view, when a data source M&A is matched, indication information (for example, a QoS label/label) of quality of service information is added; and |
| | | indication information (for example, a QFI) of the quality of service information is added to a DFP data forwarding protocol. |
| | N3 interface, where a QFI is added to a GTP tunnel. | |
| Default bearer | Present | The default bearer is not required. |
| Session session | PDU session | There is no session session. The policy architecture may not be limited to E2E of UE-RAN-UPF, and may be further classified into UE-RAN, RAN-RAN, RAN-CN, and NF-NF. Flexibility is higher. |

### Implementation 2:

Based on the method in FIG. 6, in Implementation 2, a procedure of determining a policy of an AI training service is described in detail by using a specific example in which the AI training service is a first service. As shown in FIG. 9A-1 to FIG. 9A-3, the procedure of determining the policy of the AI training service is as follows:
S901A: A service requester (user) and xSSM perform user subscription and registration.

S901A is an initial phase in which the user registers with and subscribes to xSSM.

For example, a process in which the service requester (user) registers with and subscribes to xSSM and subscribes to a service may include the following steps:
Step 1: The service requester (user) sends user registration request information to xSSM.

Step 2: xSSM verifies a user qualification and creates a customer.

In step 2, xSSM may generate user level information.

Step 3: xSSM sends registration request confirmation information to the service requester (user).

Step 4: The service requester (user) sends AI service subscription request information to xSSM.

Step 5: xSSM generates an AI service ID (or an ID of the AI training service), a service type, an area, the policy of the AI-related service, and the like based on the AI service subscription request information. The policy of the AI-related service may include a data amount of an entity that provides an AI service, a network function (NF) that provides an AI service, a type of a model, precision of the model, a time upper limit of the AI service, a bandwidth, a time period, an incentive policy, and the like.

Step 6: xSSM sends AI service subscription request confirmation information to the service requester (user), to notify the service requester (user) that AI service subscription succeeds.

S902A: The service requester (user) indicates, to an AF, that the AI service is activated.

S903A: The AF sends request information of the AI training service to a DO/DC. Correspondingly, the DO/DC receives the request information of the AI training service.

The request information of the AI training service (an example of the first service in the solution in FIG. 6) carries an ID of the AI training service.

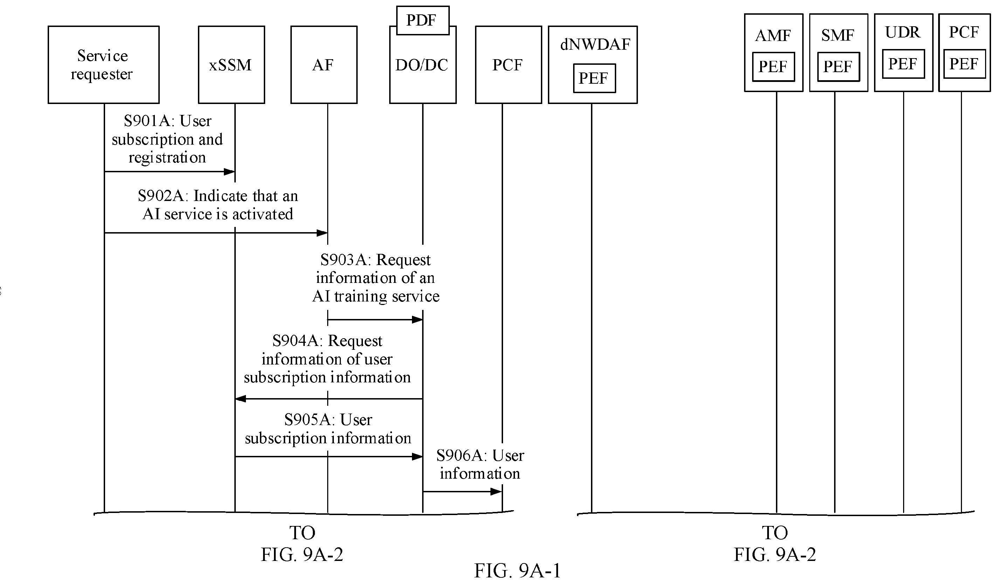

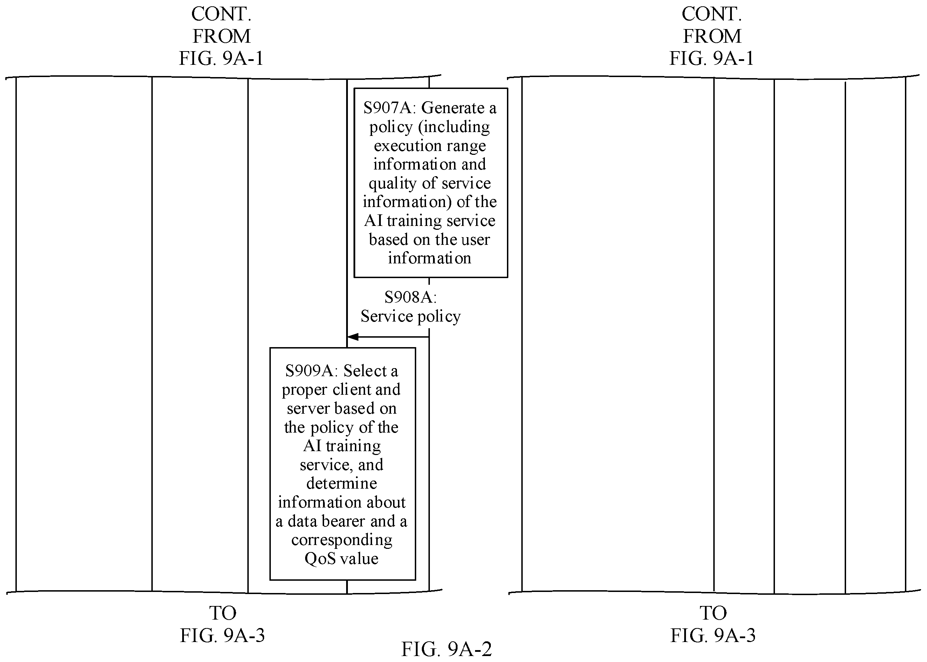

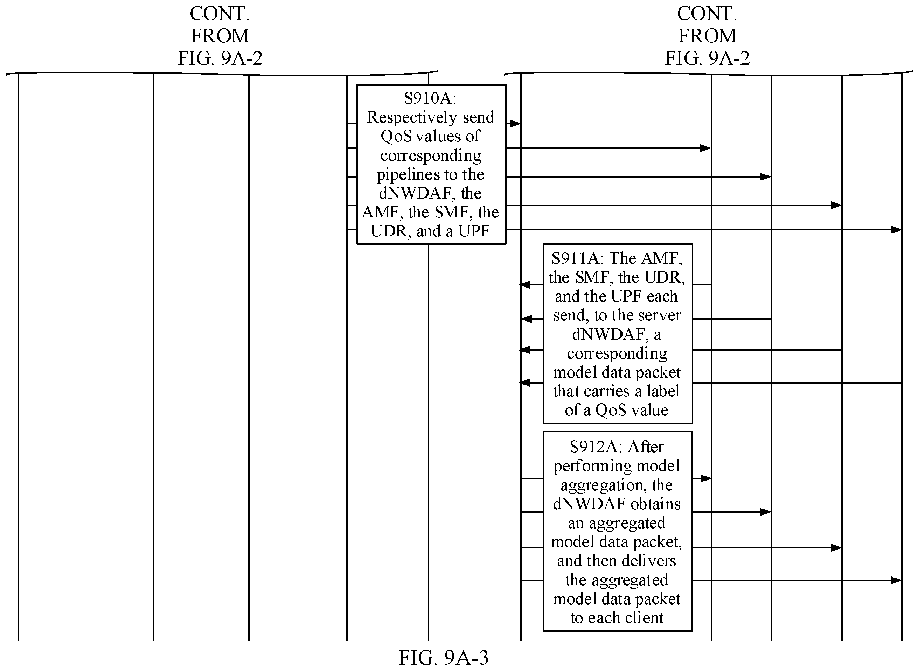

In Implementation 2, as shown in FIG. 9B, a PDF is integrated in the DC or DO.

In S903A, the user may request the AI training service from the DO/DC.

S904A: The DO/DC sends request information of user subscription information to xSSM. Correspondingly, xSSM receives the request information of the user subscription information.

Optionally, the request information of the user subscription information carries the ID of the AI training service.

For example, x in xSSM represents the AI training service.

S905A: xSSM sends the user subscription information to the DO/DC. Correspondingly, the DO/DC receives the user subscription information.

The user subscription information (an example of the user information of the first service in the solution in FIG. 6) may include the policy of the AI-related service, the user level information, and the like. After obtaining the user subscription information, the DO/DC may further obtain location information (for example, location information of a cell in which the service requester is located when accessing network) carried when the service requester (user) goes online.

S906A: The DO/DC sends user information to a PCF. Correspondingly, the PCF receives the user information (an example of the user information of the first service in the solution in FIG. 6).

The user information includes the user subscription information and the location information carried when the user (requester) goes online.

S907A: The PCF generates the policy (an example of the policy information of the first service in the solution in FIG. 6) of the AI training service based on the user information.

The policy of the AI training service includes execution range information, quality of service information, and the like of the AI training service.

S908A: The PCF sends the policy of the AI training service to the DO/DC. Correspondingly, the DO/DC receives the policy of the AI training service.

S909A: The DO/DC selects a proper client and server based on the policy of the AI training service, and determines information about a data bearer (an example of the execution range information of the first service in the solution in FIG. 6) and a corresponding QoS value (an example of the quality of service information of the first service in the solution in FIG. 6).

In a possible implementation, the DO/DC selects a proper client client (which may be considered as a source node that collects AI data) based on capability information reported by each NF in an execution range, and designs the data bearer, that is, designs at least one pipeline. The PDF determines a source node and a destination node that correspond to each pipeline, and a QoS value of each pipeline.

For example, as shown in FIG. 9B, the PDF is deployed in the DO/DC, the DO/DC selects an AMF, an SMF, a unified data repository (unified data repository, UDR), or a UPF serves as a client (which may be considered as a source node of a pipeline), and a dNWDAF is a server (which may be considered as a destination node of the pipeline).

In the foregoing, the PCF is an example of the first function network element in the solution in FIG. 6. The DO/DC is an example of the second function network element in the solution in FIG. 6.

S910A: The DO/DC respectively send QoS values of corresponding pipelines to the dNWDAF, the AMF, the SMF, the UDR, and a UPF.

For example, as shown in FIG. 9B, the AMF may construct a pipeline 1 (corresponding to a QoS value 1) with the dNWDAF, the SMF may construct a pipeline 2 (corresponding to a QoS value 2) with the dNWDAF, the UDR may construct a pipeline 3 (corresponding to a QoS value 3) with the dNWDAF, and the UPF may construct a pipeline 4 (corresponding to a QoS value 4) with the dNWDAF. The DO/DC sends the QoS value 1 to the AMF, sends the QoS value 2 to the SMF, sends the QoS value 3 to the UDR, and sends the QoS value 4 to the UPF. The DO/DC may further send the QoS values of these pipelines to the dNWDAF.

Optionally, the DO/DC further sends an ID of the AI service or an ID of the pipeline 1 to the AMF, further sends the ID of the AI service or an ID of the pipeline 2 to the SMF, further sends the ID of the AI service or an ID of the pipeline 3 to the UDR, and further sends the ID of the AI service or an ID of the pipeline 4 to the UPF. Optionally, the DO/DC may further send the IDs of these pipelines to the dNWDAF. In this way, a data bearer including DSID1/DPID1 to DSID1/DPID4 shown in FIG. 9B may be formed.

For example, in the foregoing, the DO/DC may send a corresponding QoS value, an ID of the service, or an ID of a pipeline to the AMF, the SMF, the UDR, and the dNWDAF based on an M&A mechanism.

S911A: The clients, namely, the AMF, the SMF, the UDR, and the UPF each send, to the server dNWDAF, a corresponding model data packet that carries a label of a QoS value.

As shown in FIG. 9B, after completing local model training, the AMF, the SMF, the UDR, and the UPF each obtain the corresponding model data packet, add an identifier/label corresponding to the QoS value to a packet header of the model data packet, and then upload the model data packet to the server dNWDAF based on DSID/DPID.

For example, the AMF obtains a model data packet 1 through local training, and adds an ID of the QoS value 1 to a packet header of the model data packet 1. The SMF obtains a model data packet 2 through local training, and adds an ID of the QoS value 2 to a packet header of the model data packet 2. The UDR obtains a model data packet 3 through local training, and adds an ID of the QoS value 3 to a packet header of the model data packet 3. The UPF obtains a model data packet 4 through local training, and adds an ID of the QoS value 4 to a packet header of the model data packet 4.

Further, the AMF sends the model data packet 1 (carrying the ID of the QoS value 1) to the server dNWDAF based on the ID of the pipeline 1. The SMF sends the model data packet 2 (carrying the ID of the QoS value 2) to the server dNWDAF based on the ID of the pipeline 2. The UDR sends model data 3 (carrying the ID of the QoS value 3) to the server dNWDAF based on the ID of the pipeline 3. The AMF sends model data 4 (carrying the ID of the QoS value 4) to the server dNWDAF based on the ID of the pipeline 4.

S912A: After performing model aggregation, the server dNWDAF obtains an aggregated model data packet, and then delivers the aggregated model data packet to each client.

For example, the server dNWDAF performs model aggregation based on the model data packet 1, the model data packet 2, the model data packet 3, and the model data packet 4, to obtain an aggregated model data packet. The dNWDAF adds the ID of the QoS value 1 to a packet header of the aggregated model data packet, and sends the aggregated model data packet to the AMF. The dNWDAF adds the ID of the QoS value 2 to the packet header of the aggregated model data packet, and sends the aggregated model data packet to the SMF. The dNWDAF adds the ID of the QoS value 3 to the packet header of the aggregated model data packet, and sends the aggregated model data packet to the UDR. The dNWDAF adds the ID of the QoS value 4 to the packet header of the aggregated model data packet, and sends the aggregated model data packet to the UPF.

In Implementation 2, the policy architecture provided in embodiments of this application is applied to a network scenario of the AI training service, so that a policy can be effectively formulated for the AI training service, and the policy of the AI training service can be effectively implemented.

### Implementation 3:

Based on the method in FIG. 6, in Implementation 3, a procedure of determining a policy of a sensing service is described in detail by using a specific example in which the sensing service is a first service. As shown in FIG. 10A-1 to FIG. 10A-4, the procedure of determining the policy of the sensing service is as follows:
S1001A: A data consumer (for example, an app) and xSSM perform user subscription registration and service subscription.

S1001A is an initial phase in which the data consumer (app) registers with and subscribes to xSSM.

For example, x in xSSM represents the sensing service, and xSSM is a function or a network element that provides a user management service for the sensing service.

For example, a process in which the data consumer (app) registers with and subscribes to xSSM and subscribes to a service may include the following steps:
Step 1: The data consumer (app) sends user registration request information to xSSM.

Step 2: xSSM verifies a user qualification and creates a customer.

In step 2, xSSM may generate user level information.

Step 3: xSSM sends registration request confirmation information to the data consumer (app).

Step 4: The data consumer (app) sends sensing service subscription request information to xSSM.

Step 5: xSSM generates a sensing service ID (or an ID of the sensing service), a sensing service type, an area, the policy of the sensing service, and the like based on the sensing service subscription request information. The policy of the sensing service may include information about an area in which the sensing service is executed (for example, an area in which an entity that may provide the sensing service is located), a transmission policy (for example, a maximum bandwidth, a guarantee bandwidth, a maximum repetition period, and a minimum delay), a collection policy (for example, a quantity of measurement and sensing signals, a maximum time interval, and real-time/non-real-time), and a forwarding policy (for example, topology information such as a source node, a destination node, an intermediate node, and a data pipeline, and a bandwidth and delay required for data flowing).

Step 6: xSSM sends sensing service subscription request confirmation information to the data consumer (app), to notify the data consumer (app) that sensing service subscription succeeds.

S1002A: The data consumer (app) indicates, to an AF, that the sensing service is activated.

S1003A: The AF sends request information of the sensing service to an SSCF. Correspondingly, the SSCF receives the request information of the sensing service.

Optionally, the request information of the sensing service may include the ID of the sensing service.

As shown in FIG. 10B, the SSCF is equivalent to a DO/DC in a data plane function architecture, a PDF may be integrated into a sensing service control function SSCF, and a PEF may be integrated into an SDPF, a RAN node, and UE. The SDPF may be configured to collect sensing data of another node (for example, the RAN node or the UE), process the sensing data to obtain sensing result data, and then report the sensing result data together.

S1004A: The SSCF sends request information of user subscription information to xSSM. Correspondingly, xSSM receives the request information of the user subscription information.

Optionally, the request information of the user subscription information may include the ID of the sensing service.

S1005A: xSSM sends the user subscription information to the SSCF. Correspondingly, the SSCF receives the user subscription information.

The SSCF obtains the user subscription information, and may further obtain location information carried when the data consumer (app) goes online.

S1006A: The SSCF sends user information (an example of the user information of the first service in the solution in FIG. 6) to the PCF.

The user information includes the user subscription information and the location information carried when the data consumer (app) goes online.

S1007A: The PCF generates the policy (an example of the policy information of the first service in the solution in FIG. 6) of the sensing service based on the user information.

The policy of the sensing service may include the information about an area in which the sensing service is executed (for example, an area in which an entity that may provide the sensing service is located), a transmission policy (for example, a maximum bandwidth, a guarantee bandwidth, a maximum repetition period, and a minimum delay), a collection policy (for example, a quantity of measurement and sensing signals, a maximum time interval, and real-time/non-real-time), and a forwarding policy (for example, topology information such as a source node, a destination node, an intermediate node, and a data pipeline, and a bandwidth and delay required for data flowing).

S1008A: The PCF sends the policy of the sensing service to the SSCF. Correspondingly, the SSCF receives the policy of the sensing service.

S1009A: The SSCF selects the source node RAN or UE, and the destination node SDPF based on the policy of the sensing service, and determines information about a data bearer (an example of the execution range information of the first service in the solution in FIG. 6) and a corresponding QoS value (an example of the quality of service information of the first service in the solution in FIG. 6).

In a possible implementation, the SSCF (integrated with the PDF) selects a proper source node (for example, the RAN or UE) and a proper destination node (SDPF) based on capability information reported by each node in an execution range of the sensing service, designs the data bearer, that is, designs at least one pipeline, and determines a source node and a destination node that correspond to each pipeline and a QoS value of each pipeline.

For example, the SSCF determines that the RAN and the SDPF are constructed as a pipeline 1, the UE and the SDPF are constructed as a pipeline 2, and the SSCF further determines a QoS value 1 of the pipeline 1 and a QoS value 2 of the pipeline 2.

The PCF is an example of the first function network element in the solution in FIG. 6, and the SSCF is an example of the second function network element in the solution in FIG. 6.

S1010A: The SSCF respectively sends QoS values of corresponding pipelines to the RAN, the UE, and the SDPF.

For example, the SSCF determines that the RAN and the SDPF are constructed as the pipeline 1, the UE and the SDPF are constructed as the pipeline 2, and the SSCF further determines the QoS value 1 of the pipeline 1 and the QoS value 2 of the pipeline 2. The SSCF sends the QoS value 1 of the pipeline 1 to the RAN. Optionally, the SSCF further sends an ID of the pipeline 1 to the RAN, and the SSCF sends the QoS value 2 of the pipeline 2 to the UE. Optionally, the SSCF further sends an ID of the pipeline 2 to the UE. Herein, the SSCF sends the QoS value 1 and the QoS value 2 to the SDPF. Optionally, the SSCF further sends the ID of the pipeline 1 and the ID of the pipeline 2 to the SDPF.

In this implementation, a time sequence in which the SSCF respectively sends the QoS values of the corresponding pipelines and/or the IDs of the corresponding pipelines to the RAN, the UE, and the SDPF is not specifically limited.

S1011A: The RAN obtains a sensing data packet 1 after executing a sensing receiving task, and adds an ID or a label of a QoS value to a packet header of the sensing data packet 1.

S1012A: The UE obtains a sensing data packet 2 after executing the sensing receiving task, and adds the ID or the label of the QoS value to a packet header of the sensing data packet 2.

S1011A and S1012A may be performed synchronously, or may not be performed synchronously, and an execution sequence is not limited.

S1013A: The RAN performs tunnel mapping, and sends a sensing data packet 1 (carrying the ID or the label of the QoS value) to the SDPF through a corresponding tunnel.

S1014A: The UE performs DRB mapping, and sends a sensing data packet 2 (carrying the ID or the label of the QoS value) to the RAN through a corresponding DRB.

S1013A and S1014A may be performed synchronously, or may not be performed synchronously, and an execution sequence is not specifically limited.

S1015A: The RAN performs tunnel mapping, and sends a sensing data packet 2 (carrying the ID or the label of the QoS value) to the SDPF through a corresponding tunnel.

S1016A: The SDPF performs sensing data processing based on the sensing data packet 1 and the sensing data packet 2, and obtains a sensing result.

The SDPF sends the sensing result (or measurement data or raw data) to the AF, and the AF forwards the sensing result to a user (namely, the data consumer).

In addition, the SSCF deletes the information about the data bearer after confirming that a sensing task is completed.

In Implementation 3, the policy architecture provided in embodiments of this application is applied to a network scenario of the sensing service, so that a policy can be effectively formulated for the sensing service, and the policy of the sensing service can be effectively implemented.

In the foregoing embodiments provided in this application, the methods provided in embodiments of this application are separately described from a perspective of interaction between devices. To implement functions in the foregoing method provided in embodiments of this application, the first function network element, the second function network element, or the first source node may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, division into modules is an example, and is merely a logical function division. In an actual implementation, another division manner may be used. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

Same as the foregoing concept, as shown in FIG. 11, an embodiment of this application further provides a communication apparatus 1100, configured to implement a function of the first function network element, the second function network element, or the first source node in the foregoing method. For example, the communication apparatus 1100 may be a software module or a chip system. In this embodiment of this application, the chip system may include a chip, or may include a chip and another discrete component. The communication apparatus 1100 may include a communication unit 1101 and a processing unit 1102.

In this embodiment of this application, the communication unit 1101 may also be referred to as a transceiver unit, and may include a sending unit and/or a receiving unit, which are respectively configured to perform the sending and receiving steps of the first function network element, the second function network element, or the first source node in the foregoing method embodiments. The processing unit 1102 may be configured to read instructions and/or data in a storage module, to enable the communication apparatus 1100 to implement the foregoing method embodiments.

Optionally, the communication apparatus 1100 may further include a storage unit 1103. The storage unit 1103 is equivalent to the storage module, and may be configured to store the instructions and/or the data.

The following describes the communication apparatus provided in embodiments of this application in detail with reference to FIG. 11 and FIG. 12. It should be understood that descriptions of apparatus embodiments correspond to the descriptions of the method embodiments. Therefore, for content that is not described in detail, refer to the foregoing method embodiments in FIG. 6, FIG. 9A-1 to FIG. 9A-3, and FIG. 10A-1 to FIG. 10A-4. For brevity, details are not described herein again.

The communication unit 1101 may also be referred to as a transceiver, a transceiver machine, a transceiver apparatus, or the like. The processing unit may also be referred to as a processor, a processing board, a processing module, a processing apparatus, or the like. Optionally, a component that is in the communication unit 1101 and that is configured to implement the receiving function may be considered as a receiving unit, and a component that is in the communication unit 1101 and that is configured to implement the sending function may be considered as a sending unit. That is, the communication unit 1101 includes the receiving unit and the sending unit. The communication unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

When the communication apparatus 1100 performs the first function network element in the procedure shown in FIG. 6 in the foregoing embodiments, the communication unit 1101 is configured to obtain user information of a first service; the processing unit 1102 is configured to determine policy information of the first service based on the user information of the first service, where the policy information of the first service includes execution range information of the first service and quality of service information of the first service; and the communication unit 1101 is further configured to send the policy information of the first service to a second function network element.

When the communication apparatus 1100 performs the second function network element in the procedure shown in FIG. 6 in the foregoing embodiments, the communication unit 1101 is configured to receive policy information of a first service from a first function network element, where the policy information of the first service includes execution range information of the first service and quality of service information of the first service; the communication unit 1101 is further configured to obtain status information of a network and/or capability information of a node within an execution range; and the processing unit 1102 is configured to determine information about a data bearer of the first service and quality of service information of the data bearer based on the policy information of the first service, and the status information of the network and/or the capability information of the node, where the information about the data bearer includes information about at least one data pipeline within the execution range, and the quality of service information of the data bearer includes quality of service information corresponding to each of the at least one data pipeline.

When the communication apparatus 1100 performs the first source node in the procedure shown in FIG. 6 in the foregoing embodiment, for the communication unit 1101,
the communication unit 1101 is configured to receive quality of service information of the first data pipeline from a second function network element, where the first data pipeline is any one of at least one data pipeline corresponding to a first service; the communication unit 1101 is further configured to send data of the first service and indication information of the quality of service information of the first data pipeline; and the processing unit 1102 is configured to control/indicate the communication unit 1101 to perform sending and/or receiving functions and data and/or information processing.

The foregoing is merely an example. The processing unit 1102 and the communication unit 1101 may further perform other functions. For more detailed descriptions, refer to related descriptions in the method embodiments shown in FIG. 6, FIG. 9A-1 to FIG. 9A-3, and FIG. 10A-1 to FIG. 10A-4. Details are not described herein again.

FIG. 12 shows a communication apparatus 1200 according to an embodiment of this application. The communication apparatus shown in FIG. 12 may be an implementation of a hardware circuit of the communication apparatus shown in FIG. 11. The communication apparatus 1200 may be used in the foregoing flowchart, and perform a function of the first function network element, the second function network element, or the first source node in the foregoing method embodiments. For ease of description, FIG. 12 shows only main components of the communication apparatus.

As shown in FIG. 12, the communication apparatus 1200 includes a communication interface 1201 and a processor 1202. The communication interface 1201 and the processor 1202 are coupled to each other. It may be understood that the communication interface 1201 may be a transceiver or an input/output interface, or may be an interface circuit like a transceiver circuit. Optionally, the communication apparatus 1200 may further include a memory 1203, configured to: store instructions executed by the processor 1202, or store input data required by the processor 1202 to run the instructions, or store data generated after the processor 1202 runs the instructions.

When the communication apparatus 1200 is configured to implement the methods shown in FIG. 6, FIG. 9A-1 to FIG. 9A-3, and FIG. 10A-1 to FIG. 10A-4, the communication interface 1201 is configured to implement a function of the communication unit 1101, and the processor 1202 is configured to implement a function of the processing unit 1102.

A specific connection medium between the communication interface 1201, the processor 1202, and the memory 1203 is not limited in this embodiment of this application. In this embodiment of this application, in FIG. 12, the memory 1203, the processor 1202, and the communication interface 1201 are connected through a communication bus 1204. The communication bus 1204 is represented by a thick line in FIG. 12. A connection manner between other components is merely an example for description, and is not limited thereto. The communication bus 1204 may be classified into an address bus, a data bus, a control bus, and the like. For ease of representation, only one thick line is used to represent the bus in FIG. 12, but this does not mean that there is only one bus or only one type of bus.

When the communication apparatus is a chip, FIG. 13 is a diagram of a simplified apparatus structure of a chip. A chip 1300 includes an interface circuit 1301 and one or more processors 1302. Optionally, the chip 1300 may further include a bus.

The processor 1302 may be an integrated circuit chip and has a signal processing capability. In an implementation process, steps in the foregoing sensing service policy determining method may be completed by using a hardware integrated logic circuit in the processor 1302, or by using instructions in a form of software. The processor 1302 may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor 1302 may implement or perform the methods and steps that are disclosed in embodiments of this application. The general-purpose processor may be a microprocessor, or the processor may be any conventional processor or the like.

The interface circuit 1301 may be configured to send or receive data, instructions, or information. The processor 1302 may process the data, the instructions, or other information received through the interface circuit 1301, and send, through the interface circuit 1301, information obtained through processing.

Optionally, the chip further includes a memory 1303. The memory 1303 may include a read-only memory and a random access memory, and provide operation instructions and data for the processor. A part of the memory 1303 may further include a non-volatile random access memory (non-volatile random access memory, NVRAM).

Optionally, the memory stores an executable software module or a data structure, and the processor may perform a corresponding operation by invoking the operation instructions stored in the memory (the operation instructions may be stored in an operating system).

Optionally, the chip may be used in the first function network element, the second function network element, or the first source node in embodiments of this application. Optionally, the interface circuit 1301 may be configured to output an execution result of the processor 1302. For the sensing service policy determining method provided in one or more embodiments of this application, refer to the foregoing embodiments. Details are not described herein again.

It should be noted that functions respectively corresponding to the interface circuit 1301 and the processor 1302 may be implemented by using a hardware design, or may be implemented by using a software design, or may be implemented by using a combination of software and hardware. This is not limited herein.

An embodiment of this application further provides a computer-readable storage medium. The computer-readable storage medium stores computer instructions used to implement the method performed by the first function network element, the second function network element, or the first source node in the foregoing method embodiments.

For example, when the computer program is executed by a computer, the computer is enabled to implement the method performed by the first function network element, the second function network element, or the first source node in the foregoing method embodiments.

An embodiment of this application further provides a computer program product including instructions. When the instructions are executed by a computer, the computer is enabled to implement the method performed by the first function network element, the second function network element, or the first source node in the foregoing method embodiments.

An embodiment of this application further provides a chip, including a processor, configured to invoke a computer program or computer instructions stored in the memory, so that the processor performs the sensing service policy determining method in the embodiments shown in FIG. 6, FIG. 9A-1 to FIG. 9A-3, and FIG. 10A-1 to FIG. 10A-4.

In a possible implementation, an input into the chip corresponds to the receiving operation in the embodiments shown in FIG. 6, FIG. 9A-1 to FIG. 9A-3, and FIG. 10A-1 to FIG. 10A-4, and an output of the chip corresponds to the sending operation in the embodiments shown in FIG. 6, FIG. 9A-1 to FIG. 9A-3, and FIG. 10A-1 to FIG. 10A-4.

Optionally, the processor is coupled to the memory through an interface.

Optionally, the chip further includes the memory. The memory stores the computer program or the computer instructions.

The processor mentioned in any one of the foregoing descriptions may be a general-purpose central processing unit, a microprocessor, an application-specific integrated circuit (application-specific integrated circuit, ASIC), or one or more integrated circuits configured to control execution of a program of the sensing service policy determining method in the embodiments shown in FIG. 6, FIG. 9A-1 to FIG. 9A-3, and FIG. 10A-1 to FIG. 10A-4. The memory mentioned in any one of the foregoing descriptions may be a read-only memory (read-only memory, ROM), another type of static storage device that can store static information and instructions, a random access memory (random access memory, RAM), or the like.

It should be noted that for ease and brevity of description, for explanations and beneficial effects of related content of any one of the communication apparatuses provided above, refer to the embodiment of the corresponding sensing service policy determining method provided above. Details are not described herein again.

In this application, the communication apparatus may further include a hardware layer, an operating system layer running above the hardware layer, and an application layer running above the operating system layer. The hardware layer may include hardware such as a central processing unit (central processing unit, CPU), a memory management module (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

Through descriptions of the foregoing implementations, a person skilled in the art may clearly understand that embodiments of this application may be implemented by hardware, firmware or a combination thereof. When embodiments of this application are implemented by software, the foregoing functions may be stored in a computer-readable medium or transmitted as one or more instructions or code in the computer-readable medium. The computer-readable medium includes a computer storage medium and a communication medium. The communication medium includes any medium that enables a computer program to be transmitted from one place to another place. The storage medium may be any available medium accessible to a computer. Examples of the computer-readable medium include but are not limited to: a RAM, a ROM, an electrically erasable programmable read only memory (electrically erasable programmable read only memory, EEPROM), a compact disc read-only memory (compact disc read-only memory, CD-ROM) or another optical disc storage, a disk storage medium or another disk storage device, or any other medium that can be used to carry or store expected program code in an instruction or data structure form and can be accessed by a computer. In addition, any connection may be properly defined as a computer-readable medium. For example, if software is transmitted from a website, a server, or another remote source by using a coaxial cable, an optical fiber and optical cable, a twisted pair, a digital subscriber line (digital subscriber line, DSL), or wireless technologies such as infrared, radio, and microwave, the coaxial cable, the optical fiber and optical cable, the twisted pair, the DSL, or the wireless technologies such as infrared, radio, and microwave are included in a definition of a medium to which the coaxial cable, the optical fiber and optical cable, the twisted pair, the DSL, or the wireless technologies such as the infrared ray, the radio, and the microwave belong. For example, a disk (disk) and a disc (disc) used in embodiments of this application include a compact disc (compact disc, CD), a laser disc, an optical disc, a digital video disc (digital video disc, DVD), a floppy disk and a Blu-ray disc. The disk generally copies data by a magnetic means, and the disc copies data optically by a laser means. The foregoing combination should also be included in the protection scope of the computer-readable medium.

In a word, the foregoing descriptions are merely embodiments of this application and are not intended to limit the protection scope of this application. Any modification, equivalent substitution, and improvement made based on the disclosure of this application shall fall within the protection scope of this application.

## Claims

1. A service policy determining method, wherein the method is applied to a first function network element, and comprises:
obtaining user information of a first service;
determining policy information of the first service based on the user information of the first service, wherein the policy information of the first service comprises execution range information of the first service and quality of service information of the first service; and
sending the policy information of the first service to a second function network element.

2. The method according to claim 1, wherein the user information of the first service comprises one or more of the following:
user subscription information of the first service, user registration information of the first service, and service subscription information of the first service.

3. The method according to claim 1 or 2, wherein the obtaining the user information of the first service comprises: obtaining the user information of the first service from a service user management network element; and
the service user management network element is deployed standalone in a network, or the service user management network element is co-located with a data storage network element, or the service user management network element is the data storage network element.

4. A service policy determining method, wherein the method is applied to a second function network element, and comprises:
receiving policy information of a first service from a first function network element, wherein the policy information of the first service comprises execution range information of the first service and quality of service information of the first service;
obtaining status information of a network and/or capability information of a node within the execution range; and
determining information about a data bearer of the first service and quality of service information of the data bearer based on the policy information of the first service, and the status information of the network and/or the capability information of the node, wherein the information about the data bearer comprises information about at least one data pipeline within the execution range, and the quality of service information of the data bearer comprises quality of service information corresponding to each of the at least one data pipeline.

5. The method according to claim 4, wherein the determining the information about the data bearer of the first service and the quality of service information of the data bearer based on the policy information of the first service, and the status information of the network and/or the capability information of the node comprises:
determining, based on the execution range information of the first service, and the status information of the network and/or the capability information of the node, information about a destination node and information about a source node that correspond to each of the at least one data pipeline within the execution range; and
determining, based on the quality of service information of the first service, and the status information of the network and/or the capability information of the node, the quality of service information corresponding to each of the at least one data pipeline.

6. The method according to claim 4 or 5, wherein information about each data pipeline comprises information about at least one destination node and information about at least one source node, and the method further comprises:
separately sending, based on the information about the at least one source node corresponding to each data pipeline, quality of service information corresponding to the data pipeline to the at least one source node.

7. The method according to claim 6, wherein the information about the data pipeline further comprises information about at least one intermediate node within the execution range.

8. A service policy determining method, wherein the method is applied to a first source node of a first data pipeline, and comprises:
receiving quality of service information of the first data pipeline from a second function network element, wherein the first data pipeline is any one of at least one data pipeline corresponding to a first service; and
sending data of the first service and indication information of the quality of service information of the first data pipeline.

9. The method according to claim 8, wherein the data of the first service and the indication information of the quality of service information of the first data pipeline are located in a same data packet.

10. The method according to claim 8 or 9, wherein when the first source node is deployed in a first radio access network node, the sending the data of the first service and the indication information of the quality of service information of the first data pipeline comprises:
mapping the first data pipeline to a corresponding first communication tunnel; and
sending the data of the first service and the indication information of the quality of service information of the first data pipeline to a second radio access network node or a core network element through the first communication tunnel, wherein
the second radio access network node and the core network element are destination nodes or intermediate nodes corresponding to the first data pipeline.

11. The method according to claim 8 or 9, wherein when the first source node is deployed in a terminal, the sending the data of the first service and the indication information of the quality of service information of the first data pipeline comprises:
mapping the first data pipeline to a corresponding first data radio bearer; and
sending the data of the first service and the indication information of the quality of service information of the first data pipeline to a radio access network node through the first data radio bearer, wherein the radio access network node is a destination node or an intermediate node corresponding to the first data pipeline.

12. The method according to claim 10, wherein the first communication tunnel further corresponds to a second data pipeline, and the second data pipeline is configured to transmit data of a second service.

13. The method according to claim 11, wherein the first data radio bearer further corresponds to a second data pipeline, and the second data pipeline is configured to transmit data of a second service.

14. The method according to any one of claims 1 to 7, wherein the quality of service information of the first service comprises one or more of the following:
bandwidth information of the first service, priority information of the first service, delay information of the first service, delay change information of the first service, security level information of the first service, privacy level information of the first service, transmission rate information of the first service, routing information of the first service, and key information used for the first service.

15. The method according to any one of claims 1 to 7 and 14, wherein the policy information of the first service further comprises one or more of the following:
collection policy information of the first service, forwarding policy information of the first service, computation policy information of the first service, and security policy information of the first service.

16. The method according to any one of claims 1 to 7, 14, and 15, wherein the first function network element is deployed standalone, or the first function network element is co-located with a policy control function network element, or the first function network element is a policy control function network element.

17. The method according to any one of claims 4 to 13, wherein the node is a policy enforcement function network element; and
the policy enforcement function network element is deployed standalone and serves a second service network element, or the policy enforcement function network element is deployed in the second service network element; and the second service network element is any one of the following:
a terminal, a radio access network node, an access and mobility management function, a session management function, a unified data repository, a user plane function, and a sensing data processing function.

18. The method according to any one of claims 1 to 17, wherein the second function network element is deployed standalone in a core network, an access network, or a network management system, or the second function network element is co-located with a first service network element; and the first service network element is any one of the following:
a data controller, a sensing service control function, a task anchor, and a task scheduler.

19. The method according to any one of claims 1 to 18, wherein the first service comprises one or more of the following:
a sensing service, an artificial intelligence service, a network service, an internet of things service, a security service, and a sustainability service.

20. A communication system, comprising a first function network element and a second function network element;
the first function network element is configured to: obtain user information of a first service; determine policy information of the first service based on the user information of the first service, wherein the policy information of the first service comprises execution range information of the first service and quality of service information of the first service; and send the policy information of the first service to the second function network element; and
the second function network element is configured to: obtain status information of a network and/or capability information of a node within the execution range; and determine information about a data bearer of the first service and quality of service information of the data bearer based on the policy information of the first service, and the status information of the network and/or the capability information of the node, wherein the information about the data bearer comprises information about at least one data pipeline within the execution range, and the quality of service information of the data bearer comprises quality of service information corresponding to each of the at least one data pipeline.

21. The communication system according to claim 20, wherein the first function network element is further configured to perform the method according to any one of claims 2 and 3, 14 to 16, 18, and 19, and the second function network element is further configured to perform the method according to any one of claims 5 to 7 and 14 to 19.

22. The communication system according to claim 20 or 21, further comprising at least one destination node and at least one source node that correspond to each data pipeline, wherein any one of the at least one source node performs the method according to any one of claims 8 to 13 and 17 to 19.

23. A communication apparatus, comprising a module for performing the method according to any one of claims 1 to 3, 14 to 16, 18, and 19, or comprising a module for performing the method according to any one of claims 4 to 7 and 14 to 19, or comprising a module for performing the method according to any one of claims 8 to 13 and 17 to 19.

24. A computer-readable storage medium, storing a computer program or instructions, wherein the computer program or the instructions are used to implement the method according to any one of claims 1 to 19.

25. A computer program product, wherein the computer program product comprises a computer program, and when the computer program is run on a computer, the computer is enabled to perform the method according to any one of claims 1 to 19.

26. A communication apparatus, comprising at least one processor and a communication interface, wherein the communication interface is configured to communicate with another apparatus, and the at least one processor is configured to: perform the method according to any one of claims 1 to 3, 14 to 16, 18, and 19, or perform the method according to any one of claims 4 to 7 and 14 to 19, or the method according to any one of claims 8 to 13 and 17 to 19.

27. The communication apparatus according to claim 26, further comprising a memory, wherein the memory is configured to store computer instructions, and when the processor runs the computer instructions, the method according to any one of claims 1 to 3, 14 to 16, 18, and 19 is performed, or the method according to any one of claims 4 to 7 and 14 to 19 is performed, or the method according to any one of claims 8 to 13 and 17 to 19 is performed.
